(19) **Europäisches Patentamt**
**European Patent Office**
**Office européen des brevets**

(11) **EP 4 645 737 A1**

(12) **EUROPEAN PATENT APPLICATION**
published in accordance with Art. 153(4) EPC

(43) Date of publication:
**05.11.2025 Bulletin 2025/45**

(21) Application number: **23936831.9**

(22) Date of filing: **12.05.2023**

(51) International Patent Classification (IPC):
***H04L 5/00*** *(2006.01)*

(52) Cooperative Patent Classification (CPC):
**H04L 5/00**

(86) International application number:
**PCT/CN2023/093841**

(87) International publication number:
**WO 2024/234134 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHANG, Shichang
Dongguan, Guangdong 523860 (CN)**

(74) Representative: **Taor, Simon Edward William et al
Venner Shipley LLP
200 Aldersgate
London EC1A 4HD (GB)**

(54) **SIDELINK TRANSMISSION METHOD AND APPARATUS, TERMINAL, AND
COMPUTER-READABLE STORAGE MEDIUM**

(57) Embodiments of the present application provide a sidelink transmission method and apparatus, and a terminal. The method comprises: a terminal sends or receives a Sidelink Positioning Reference Signal (SL PRS) and a physical channel, the physical channel comprising a Physical Sidelink Control Channel (PSCCH) and/or a Physical Sidelink Shared Channel (PSSCH), the SL PRS and the physical channel sharing a resource pool, and the SL PRS and the physical channel being multiplexed and transmitted in the same slot.

A terminal sends or receives an SL PRS and a physical channel, the physical channel including a PSCCH and/or a PSSCH, where the SL PRS and the physical channel share a resource pool, and the SL PRS and the physical channel are transmitted in a multiplexed manner in a same slot — 1401

**FIG. 14**

EP 4 645 737 A1

**Description**

TECHNICAL FIELD

Embodiments of the present application relate to the technical field of mobile communications, and relate specifically to a sidelink transmission method and apparatus, a terminal, and a computer-readable storage medium.

BACKGROUND

To improve positioning accuracy, the 3rd Generation Partnership Project (3GPP) has, during the relevant phases, completed feasibility and performance studies on positioning techniques based on Sidelink Positioning Reference Signals (SL PRS). Due to the introduction of SL PRS into the sidelink communication system, it is necessary to consider how to transmit SL PRS. Currently, further refinement is required regarding how SL PRS and other physical channels in the sidelink communication system are transmitted in a multiplexed manner.

SUMMARY

Embodiments of the present application provide a sidelink transmission method and apparatus, a terminal, a chip, a computer-readable storage medium, a computer program product, and a computer program.

The sidelink transmission method provided in an embodiment of the present application includes:
sending or receiving, by a terminal, an SL PRS and a physical channel, the physical channel including a Physical Sidelink Control Channel (PSCCH) and/or a Physical Sidelink Shared Channel (PSSCH), wherein the SL PRS and the physical channel share a resource pool, and the SL PRS and the physical channel are transmitted in a multiplexed manner in a same slot.

The sidelink transmission method provided in an embodiment of the present application includes:
a communication unit, configured to send or receive an SL PRS and a physical channel, the physical channel including a PSCCH and/or a PSSCH, wherein the SL PRS and the physical channel share a resource pool, and the SL PRS and the physical channel are transmitted in a multiplexed manner in a same slot.

The terminal provided in an embodiment of the present application includes a processor and a memory. The memory is configured to store a computer program, and the processor is configured to invoke and run the computer program stored in the memory to perform the sidelink transmission method.

The chip provided in an embodiment of the present application is configured to implement the sidelink transmission method.

Specifically, the chip includes: a processor, configured to invoke and run a computer program from a memory, such that a device having the chip installed therein performs the sidelink transmission method.

The computer-readable storage medium provided in an embodiment of the present application is configured to store a computer program that enables a computer to perform the sidelink transmission method.

The computer program product provided in an embodiment of the present application includes computer program instructions that enable a computer to perform the sidelink transmission method.

The computer program provided in an embodiment of the present application, when run on a computer, enables the computer to perform the sidelink transmission method.

The technical solution in the embodiments of the present application specifies that the SL PRS and the physical channel (the PSCCH and/or the PSSCH) can share a resource pool, and on this basis, the SL PRS and the physical channel (the PSCCH and/or the PSSCH) can be transmitted in a multiplexed manner in the same slot, thereby effectively ensuring resource utilization.

BRIEF DESCRIPTION OF THE DRAWINGS

The drawings illustrated here are used to provide a further understanding of the present application, and constitute a part of the present application. The illustrative embodiments of the present application and the description thereof are used to explain the present application, and do not constitute an improper limitation to the present application. In the drawings:

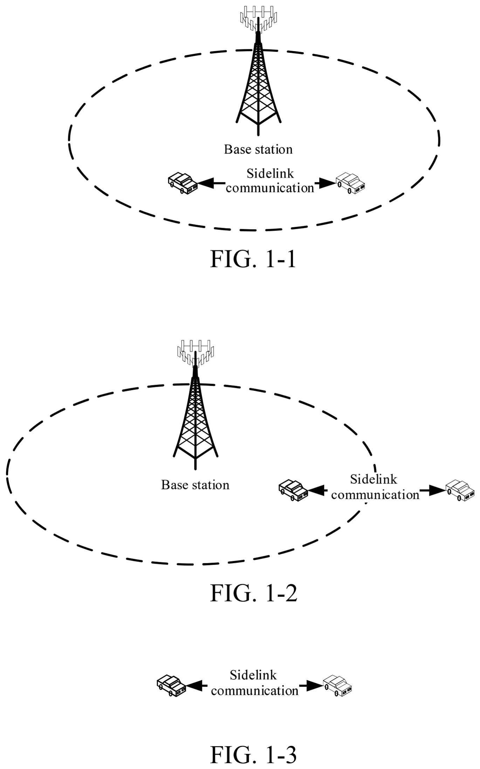

FIG. 1-1 is a schematic diagram of sidelink communication within network coverage according to an embodiment of the present application;
FIG. 1-2 is a schematic diagram of sidelink communication partially within network coverage according to an embodiment of the present application;
FIG. 1-3 is a schematic diagram of sidelink communication outside network coverage according to an embodiment of the present application;

FIG. 2 is a schematic diagram of resource selection corresponding to Mode 2 according to an embodiment of the present application;

FIG. 3 is a schematic diagram showing that some symbols in a slot are used for sidelink communication according to an embodiment of the present application;

FIG. 4 is a schematic diagram of PSCCH and PSSCH slot structures according to an embodiment of the present application;

FIG. 5 is a schematic diagram of the time domain positions of 4 DMRS symbols in a 13-symbol PSSCH according to an embodiment of the present application;

FIG. 6 is a schematic diagram of the frequency domain positions of PSSCH DMRS according to an embodiment of the present application;

FIG. 7 is a schematic diagram of PSCCH and PSSCH resource pools in NR-V2X according to an embodiment of the present application;

FIG. 8 is a schematic diagram of the slot structure of an NR system according to an embodiment of the present application;

FIG. 9 is a schematic diagram of comb size and RE offset according to an embodiment of the present application;

FIG. 10 is a schematic diagram of interlaced resource blocks according to an embodiment of the present application;

FIG. 11 is a schematic diagram of a frame structure based on interlaced resource blocks according to an embodiment of the present application;

FIG. 12 is a schematic diagram of an RB set according to an embodiment of the present application;

FIG. 13 is a first schematic flow diagram of a sidelink transmission method according to an embodiment of the present application;

FIG. 14 is a second schematic flow diagram of a sidelink transmission method according to an embodiment of the present application;

FIG. 15 is a first schematic diagram of a multiplexing structure in a slot according to an embodiment of the present application;

FIG. 16 is a second schematic diagram of a multiplexing structure in a slot according to an embodiment of the present application;

FIG. 17 is a first schematic diagram of the structural composition of a sidelink transmission apparatus according to an embodiment of the present application;

FIG. 18 is a second schematic diagram of the structural composition of a sidelink transmission apparatus according to an embodiment of the present application;

FIG. 19 is a schematic structural diagram of a communication device according to an embodiment of the present application; and

FIG. 20 is a schematic structural diagram of a chip according to an embodiment of the present application.

DETAILED DESCRIPTION

The technical solution in the embodiments of the present application is described below with reference to the drawings in the embodiments of the present application. Evidently, the described embodiments are part of the embodiments of the present application, rather than all of the embodiments. All other embodiments that are arrived at by a person of ordinary skill in the art on the basis of the embodiments in the present application without involving inventive skill fall within the scope of protection of the present application.

The technical solution in the embodiments of the present application is applicable to various sidelink communication systems. A terminal in a sidelink communication system may be any terminal, including but not limited to terminals connected to a network device or other terminals via wired or wireless links. For example, the terminal may refer to an access terminal, a user equipment (UE), a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device having a wireless communication function, a computing device or another processing device connected to a wireless modem, a vehicle-mounted device, a wearable device, a terminal in a 5G network, a terminal in a future evolved network, or the like.

To facilitate the understanding of the technical solution of the embodiments of the present application, related techniques in the sidelink communication system are described below. The following related techniques can be arbitrarily combined with the technical solution of the embodiments of the present application as optional solutions, all of which fall within the scope of protection of the embodiments of the present application.

**Sidelink Communication under Different Network Coverage Environments**

Sidelink communication may be classified into sidelink communication within network coverage, sidelink communication partially within network coverage, and sidelink communication outside network coverage based on the network coverage status of a terminal performing communication, as shown in FIG. 1-1, FIG. 1-2, and FIG. 1-3, respectively.

As shown in FIG. 1-1, in the sidelink communication within network coverage, all terminals performing sidelink communication are located within the coverage of the same base station. Therefore, the terminals can all perform sidelink communication based on the same sidelink configuration by receiving configuration signaling from the base station.

As shown in FIG. 1-2, in the case of sidelink communication partially within network coverage, some terminals performing sidelink communication are within the coverage of a base station, and can receive configuration signaling from the base station and perform sidelink communication based on the configuration from the base station. However, a terminal located outside network coverage cannot receive configuration signaling from the base station, and in this case, the terminal outside network coverage determines the sidelink configuration based on pre-configuration information and information carried in a physical sidelink broadcast channel (PSBCH) sent by a terminal within network coverage to perform sidelink communication.

As shown in FIG. 1-3, for the sidelink communication outside network coverage, all terminals performing sidelink communication are outside network coverage, and all the terminals determine the sidelink configuration based on pre-configuration information to perform sidelink communication.

**Resource Selection Manner in Sidelink Communication**

Device-to-device communication is a type of device-to-device (D2D)-based sidelink transmission technology, and is different from conventional cellular systems in which communication data is received or sent by a base station, and thus has higher spectral efficiency and lower transmission delay. Sidelink communication adopts terminal-to-terminal direct communication techniques. 3GPP defines two transmission modes: Mode 1 and Mode 2.

Mode 1: The transmission resource of a terminal is allocated by a base station, and the terminal sends data on the sidelink based on the resource allocated by the base station; and the base station may allocate a resource for a single transmission to the terminal, or may allocate a resource for semi-static transmissions to the terminal. As shown in FIG. 1-1, the terminal is within the network coverage, and the network allocates a transmission resource used for sidelink transmission to the terminal.

Mode 2: The terminal selects a resource from the resource pool to transmit data. As shown in FIG. 1-3, the terminal is outside the cell coverage, and the terminal autonomously selects a transmission resource from a pre-configured resource pool to perform sidelink transmission. Alternatively, as shown in FIG. 1-1, the terminal autonomously selects a transmission resource from a resource pool configured by the network to perform sidelink transmission.

Resource selection in Mode 2 is performed according to the following steps:

Step 1: The terminal considers all available resources within a resource selection window as resource set A, and excludes some resources from set A and uses the remaining resources as a candidate resource set.

If the terminal sends data in some slots within a sensing window without performing sensing, the all resources in the corresponding slots within the resource selection window (which may also be referred to as a selection window for short) are excluded. The terminal determines corresponding slots within the selection window by using the set of values of a "resource reservation period" field in the configuration of a used resource pool.

If the terminal detects, in the resource sensing window (which may also be referred to as the sensing window for short), a Physical Sidelink Control Channel (PSCCH), the terminal measures the reference signal received power (RSRP) of the PSCCH or the RSRP of a Physical Sidelink Shared Channel (PSSCH) scheduled by the PSCCH; and if the measured RSRP is greater than an SL-RSRP threshold, and if it is determined, based on resource reservation information in sidelink control information (SCI) transmitted in the PSCCH, that resources reserved by the terminal is within the resource selection window, then the corresponding resources are excluded from set A. If the remaining resources in resource set A are less than $X$% of the total resources in resource set A before the exclusion, the SL-RSRP threshold is increased by 3 dB, and step 1 is performed again. The possible values of $X$ are {20, 35, 50}, and the terminal determines the parameter $X$ from the value set based on a priority of data to be sent. In addition, the SL-RSRP threshold is related to a priority carried in the PSCCH detected by the terminal and the priority of the data to be sent by the terminal.

Step 2: The terminal randomly selects several resources from the candidate resource set as transmission resources for the initial transmission and retransmissions by the terminal.

It should be noted that, in this embodiment of the present application, Mode 1 may also be referred to as a first resource selection mode, and Mode 2 may also be referred to as a second resource selection mode. No limitation is imposed on the names of Mode 1 and Mode 2 in the technical solution of this embodiment of the present application.

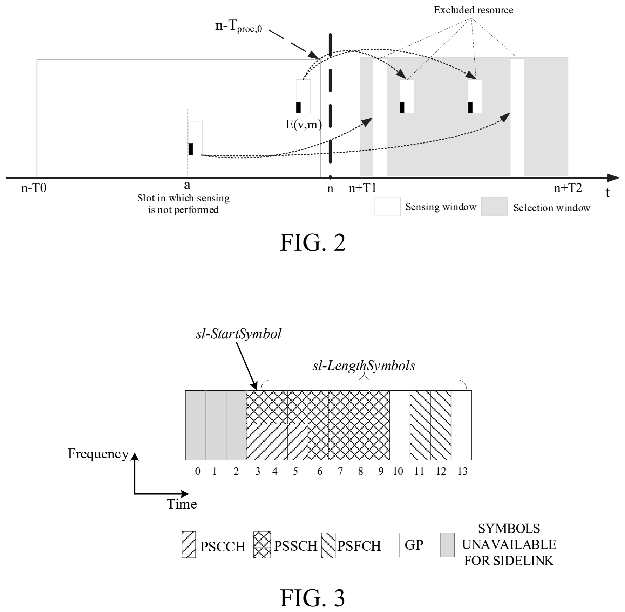

As shown in FIG. 2, the terminal triggers resource selection or reselection in slot $n$, and the resource selection window starts from $n+T1$ and ends at $n+T2$. Here, $0 \leq T1 \leq T_{proc,1}$, and when the subcarrier spacing is 15 kHz, 30 kHz, 60 kHz, or 120 kHz, $T_{proc,1}$ is 3 slots, 5 slots, 9 slots, or 17 slots. If $T_{2min}$ is less than a remaining delay budget of a service, then $T_{2min} \leq T2 \leq$ the remaining delay budget of the service; otherwise, $T2$ is equal to a remaining packet delay budget (PDB) in a unit of slot. The value set of $T_{2min}$ is $\{1, 5, 10, 20\} * 2^{\mu}$ slots, where $\mu = 0, 1, 2,$ or 3, which corresponds to the subcarrier spacing of 15 kHz, 30 kHz, 60 kHz, or 120 kHz. The terminal determines $T_{2min}$ from the value set based on the priority of the data to be sent of the terminal. $[n+T1, n+T2]$ is referred to as the resource selection window.

The terminal performs resource sensing from $n-T0$ to $n-T_{proc,0}$, where the value of $T0$ is 100 milliseconds or 1100 milliseconds. When the subcarrier spacing is 15 kHz, 30 kHz, 60 kHz, or 120 kHz, $T_{proc,0}$ is 1 slot, 1 slot, 2 slots, or 4 slots. $[n-T0, n-T_{proc,0}]$ is referred to as the resource sensing window.

The resource selection process in Mode 2 is performed in the following two steps:

Step 1: A physical layer of the terminal excludes resources unsuitable for sidelink transmission from the resource selection window based on a channel sensing result, and the physical layer of the terminal uses resource set A obtained after the resource exclusion as a candidate resource set and reports the same to a higher layer, that is, an MAC layer of the terminal.

The terminal uses all available resources belonging to the resource pool used by the terminal within the resource selection window as resource set A. Any resource in set A is denoted as R(x, y), where x and y respectively indicate a frequency domain position and a time domain position of the resource, representing a resource consisting of L_subch consecutive sub-channels starting from a sub-channel x in a slot y. The initial number of resources in set A is denoted as $M_{total}$.

Step 1-1: If the terminal sends data in a slot a in the sensing window without performing sensing, then the terminal determines whether slot a + q * Prxlg overlaps with resource R(x, y + j * Ptxlg); and if so, resource R(x, y) is excluded from resource set A. Here, j = 0, 1, 2, 3, ..., C-1, where C is determined by a random counter value generated by the terminal. Ptxlg is the number of logical slots converted from a resource reservation period Ptx of the terminal. Prxlg is the number of logical slots converted from the Prx. Herein, Prx is any allowed resource reservation period in the resource pool. If Prx < Tscal and n - m $\leq$ Prxlg, Q = $\lceil Tscal/Prx \rceil$; otherwise, Q = 1; and Tscal is equal to the value of $T2$ converted to milliseconds.

Step 1-2: If the terminal detects, in the sensing window, sidelink control information transmitted in the PSCCH on a v-th frequency domain resource E (v, m) in slot m, the terminal measures an SL-RSRP of the PSCCH or an SL-RSRP of a PSSCH scheduled by the PSCCH (that is, an SL-RSRP of a corresponding PSSCH sent in the same slot as the PSCCH); and if the measured SL-RSRP is greater than an SL-RSRP threshold and resource reservation between TBs is activated in the resource pool used by the terminal, the terminal assumes that sidelink control information with the same content is received in slot m + q * Prxlg. The q = 1, 2, 3, ..., or Q, and if Prx < Tscal and n - m $\leq$ Prxlg, $Q = \lceil Tscal/Prx \rceil$; otherwise, Q = 1; and Tscal is equal to the value of $T2$ converted to milliseconds. Prxlg is the number of logical slots converted from the Prx. Herein, Prx is a resource reservation period indicated by a "resource reservation period (Resource reservation period)" field in the sidelink control information transmitted in the PSCCH detected by the terminal. The terminal determines whether resources indicated by the "time resource assignment" and "frequency resource assignment" fields of both the sidelink control information received in the slot m and the Q pieces of sidelink control information assumed to be received overlap with a resource R(x, y+j*Ptxlg); and if yes, a corresponding resource R(x, y) is excluded from set A. Herein, j = 0, 1, 2, 3, ..., C-1, where C is determined by a random counter value generated by the terminal. Ptxlg is the number of logical slots converted from Ptx, where Ptx is a resource reservation period determined by the terminal performing resource selection.

The RSRP threshold is determined by a priority P1 carried in the PSCCH detected by the terminal and a priority P2 of the data to be sent by the terminal. The configuration of the resource pool used by the terminal includes an SL-RSRP threshold list, and the SL-RSRP threshold list includes SL-RSRP thresholds corresponding to all priority combinations (P1, P2). The configuration of the resource pool may be configured by the network or pre-configured. If the remaining resources in resource set A after the resources are excluded are less than $M_{total} * X$%, the SL-RSRP threshold is raised by 3 dB, and step 1 is performed again. Possible values of X are $\{20, 35, 50\}$. the configuration of the resource pool used by the terminal includes a correspondence relationship between the priority and the possible value of X, and the terminal determines the value of X based on the priority of the data to be sent and the correspondence relationship.

Step 2: The MAC layer of the terminal randomly selects a resource from the reported candidate resource set to send data. That is, the terminal randomly selects a resource from the candidate resource set to send data.

## Slot Structure in NR-V2X

In NR-V2X, a PSSCH and a PSCCH associated with the PSSCH are transmitted in a same slot, and the PSCCH occupies 2 or 3 time domain symbols (which may also be referred to as symbols for short). A time domain resource allocation of NR-V2X uses a slot as an allocation granularity. A starting point and the length of time domain symbols used for sidelink transmission (or sidelink communication, referred to as SL for short) in a slot are configured by using parameters of a start symbol position (*sl-startSLsymbols*) and the number of symbols (*sl-lengthSLsymbols*), the last symbol in this part of symbols is used as a guard period (GP), and the PSSCH and the PSCCH can use only remaining time domain symbols. However, if a physical sidelink feedback channel (PSFCH) transmission resource is configured in a slot, the PSSCH and the PSCCH cannot occupy a time domain symbol used for PSFCH transmission, and an automatic gain control (AGC) symbol and a GP symbol before the symbol. The AGC symbol refers to a symbol in which an AGC is located (or a symbol occupied by an AGC), and the GP symbol refers to a symbol in which a GP is located.

As shown in FIG. 3, the network configures *sl-StartSymbol* = 3 and *sl-LengthSymbols* = 11, that is, 11 time domain symbols starting from a symbol index 3 in a slot can be used for sidelink transmission. There are PSFCH transmission resources in the slot, and the PSFCH occupies a symbol 11 and a symbol 12, where the symbol 11 is used as an AGC symbol of the PSFCH, symbols 10 and 13 are separately used as a GP, time domain symbols that can be used for PSSCH transmission are the symbol 3 to the symbol 9, the PSCCH occupies 3 time domain symbols, that is, symbols 3, 4, and 5, and the symbol 3 is generally used as an AGC symbol.

In NR-V2X, in addition to the PSCCH and the PSSCH, the PSFCH may exist within a sidelink slot. In a slot, a first time domain symbol is fixedly used for AGC, and on the AGC symbol, the terminal copies information sent on a second symbol. At the end of the slot, one symbol is left for conversion of sending and reception, and is used by the terminal to convert from a sending (or receiving) state to a receiving (or sending) state. Among the remaining time domain symbols, the PSCCH may occupy two or three time domain symbols starting from the second time domain symbol. In the frequency domain, the number of physical resource blocks (PRBs) in which the PSCCH is located is within the range of one PSSCH sub-band. If the number of PRBs in which the PSCCH is located is less than the size of one PSSCH sub-channel, or if frequency domain resources of the PSSCH includes a plurality of sub-channels, then the PSCCH may be frequency-division multiplexed with the PSSCH in the time domain symbols in which the PSCCH is located.

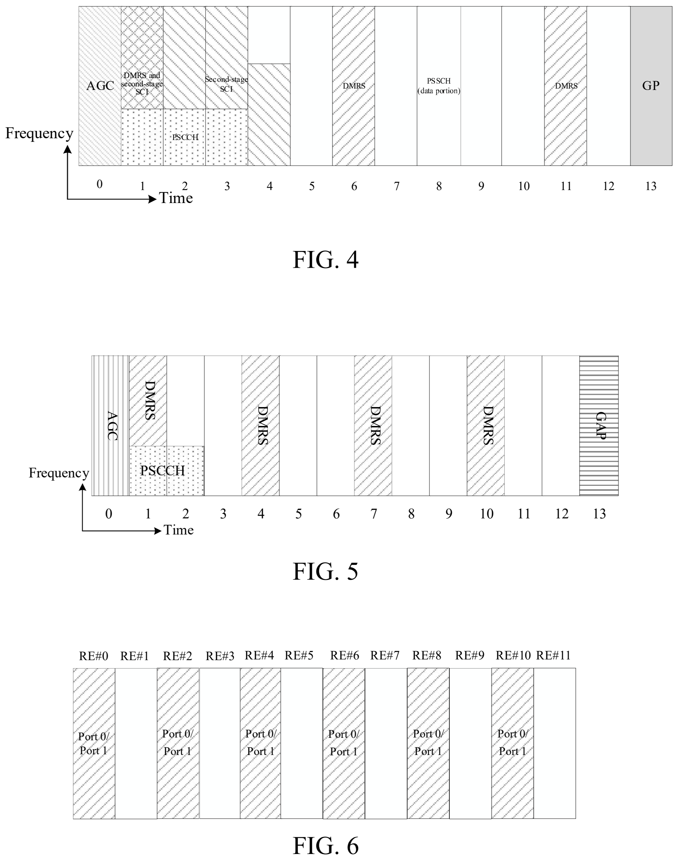

The PSSCH is used to carry second-stage sidelink control information (SCI) and a sidelink shared channel (SL-SCH). Two second-stage SCI formats, that is, an SCI format 2-A and an SCI format 2-B, are defined in 3GPP R16. The SCI format 2-B is applicable to a multicast communication manner in which sidelink HARQ feedback is performed based on distance information. The SCI format 2-A is applicable to other scenarios, for example, unicast, multicast, and broadcast that do not need a sidelink HARQ feedback, a unicast communication manner that requires a sidelink HARQ feedback, or a multicast communication manner that needs a feedback of an ACKnowledgement (ACK) or a negative ACKnowledgement (NACK). In 3GPP R17, second-stage SCI format, that is, an SCI format 2-C, is additionally introduced for indicating a reference resource set and triggering signaling in a specific case. Modulation symbols of the second-stage SCI are mapped from a first symbol where the PSSCH DMRS is located in a manner of frequency domain first and then time domain, and are multiplexed with resource elements (RE) of the PSSCH DMRS on this symbol in an interleaving manner, and the modulation symbols of the second-stage SCI cannot be mapped to an RE where a PT-RS is located, as shown in FIG. 4. The PSSCH DMRS is a demodulation reference signal (DMRS) corresponding to the PSSCH.

In a sidelink communication system, a terminal autonomously performs resource selection or determines a sending resource based on sidelink resource scheduling of a network, which may cause different terminals to send PSCCHs on the same time-frequency resource. In order to ensure that a receiver can detect at least one PSCCH when PSCCH resources conflict, a PSCCH DMRS randomization design solution is adopted in LTE-V2X, and the PSCCH DMRS is a DMRS corresponding to the PSCCH. Specifically, when the terminal sends the PSCCH, the terminal may randomly select a value from {0, 3, 6, 9} as a cyclic shift of the DMRS, and if PSCCH DMRSs sent by a plurality of terminals on the same time-frequency resource adopt different cyclic shifts, a receiving terminal may still detect at least one PSCCH through an orthogonal DMRS. For the same purpose, three PSCCH DMRS frequency domain orthogonal covering codes (OCC) are introduced into NR-V2X for random selection by a sending terminal. Table 1 shows an OCC covering code of the PSCCH DMRS. As shown in Table 1, an i-th bit of the OCC covering code is applied to an i-th DMRS RE in an RB, so as to achieve an effect of distinguishing different terminals. The DMRS RE is an RE on which the DMRS (which is the PSCCH DMRS here) is located.

Table 1

| OCC covering code index | OCC covering code | | |
|---|---|---|---|
| | $i = 0$ | $i = 1$ | $i = 2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

The PSSCH DMRS in NR-V2X draws on the design in the NR Uu interface, and adopts a plurality of time domain PSSCH DMRS patterns (referred to as time domain DMRS patterns or DMRS patterns for short). In one resource pool, the number of available DMRS patterns is related to the number of PSSCH symbols (that is, the number of symbols occupied by the PSSCH) in the resource pool. For a given number of PSSCH symbols (including a first AGC symbol) and PSCCH symbols, the available DMRS patterns and a position of each DMRS symbol in the patterns are shown in Table 2. FIG. 5 is a schematic diagram of time domain positions of four DMRS symbols in a 13-symbol PSSCH, where the number of DMRS symbols is 4, and the positions of the DMRS symbols are respectively symbols 1, 4, 7, and 10.

Table 2

| The number of PSSCH symbols (including the first AGC symbol) | Positions of DMRS symbols (relative to the position of the first AGC symbol) | | | | | |
|---|---|---|---|---|---|---|
| | The number of PSCCH symbols is 2 | | | The number of PSCCH symbols is 3 | | |
| | The number of DMRS symbols | | | The number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4,7 | | 4, 8 | 1,4,7 | |
| 10 | 3, 8 | 1,4,7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in the resource pool, a specific time domain DMRS pattern to be adopted is selected by the sending terminal and indicated in a first-stage SCI. Such a design allows a terminal moving at a high speed to select a DMRS pattern with a high density, thereby ensuring precision of channel estimation; and for a terminal moving at a low speed, a DMRS pattern with a low density may be adopted, thereby increasing spectral efficiency.

A generation manner of a PSSCH DMRS sequence is almost identical to a generation manner of a PSCCH DMRS sequence, and the only difference is that in an initialization formula $C_{init}$ of a pseudo-random sequence $C(m)$,

$$N_{ID} = \sum_{i=0}^{L-1} p_i \cdot 2^{L-1-i}$$, $p_i$ is an $i$-th cyclic redundancy check (CRC) of the PSCCH that schedules the PSSCH, and $L$ = 24, which is the number of bits of a PSCCH CRC.

Two frequency domain DMRS patterns, that is, DMRS frequency domain type 1 and DMRS frequency domain type 2, are supported in a NR PDSCH and a PUSCH, and for each frequency domain type, there are two different types, that is, a single DMRS symbol and a dual DMRS symbol. The single-symbol DMRS frequency domain type 1 supports four DMRS ports, the single-symbol DMRS frequency domain type 2 can support six DMRS ports, and in a case of the dual DMRS symbol, the number of supported ports is doubled. However, in NR-V2X, since the PSSCH only needs to support at most two DMRS ports, only the single-symbol DMRS frequency domain type 1 is supported, as shown in FIG. 6.

**Determination of NR-V2X frequency domain Resources**

Similar to LTE-V2X, frequency domain resources of an NR-V2X resource pool are also consecutive, and an allocation granularity of the frequency domain resources is also sub-channel, and the number of PRBs included in one sub-channel is {10, 12, 15, 20, 50, 75, 100}, where the smallest sub-channel size is 10 PRBs, which is much larger than the smallest sub-channel size of 4 PRBs in LTE-V2X. This is mainly because frequency domain resources of the PSCCH in NR-V2X are located in a first sub-channel of the PSSCH associated with the PSCCH, and the frequency domain resources of the PSCCH are less than or equal to the size of one sub-channel of the PSSCH, whereas time domain resources of the PSCCH occupy 2 or 3 time domain symbols. If the size of the sub-channel is configured to be small, available resources of the PSCCH are caused to be few, a code rate is increased, and a detection performance of the PSCCH is reduced. In NR-V2X, the size of the sub-channel of the PSSCH and the size of the frequency domain resource of the PSCCH are independently configured, but it is necessary to ensure that the size of the frequency domain resource of the PSCCH is less than or equal to the size of the sub-channel of the PSSCH. The following configuration parameters in configuration information of the NR-V2X resource pool are used to determine frequency domain resources of resource pools of the PSCCH and the PSSCH:

sub-channel size (sl-SubchannelSize): indicates the number of consecutive PRBs included in one sub-channel in the resource pool, with a value range of {10, 12, 15, 20, 50, 75, 100} PRBs;
the number of sub-channels (sl-NumSubchannel): indicates the number of sub-channels included in the resource pool;
sub-channel starting RB index (sl-StartRB-Subchannel): indicates the starting PRB index of the first sub-channel in the resource pool;
the number of PRBs (sl-RB-Number): indicates the number of consecutive PRBs included in the resource pool;
PSCCH frequency-domain resource indication (sl-FreqResourcePSCCH): indicates the size of frequency domain resources of the PSCCH, with a value range of {10, 12, 15, 20, 25} PRBs.

When the terminal determines the resource pool for PSSCH sending or reception, frequency domain resources included in the resource pool are sl-NumSubchannel consecutive sub-channels starting from a PRB indicated by sl-StartRB-Subchannel. If the number of PRBs included in the final sl-NumSubchannel consecutive sub-channels is less than the number of PRBs indicated by sl-RB-Number, remaining PRBs cannot be used for PSSCH sending or reception.

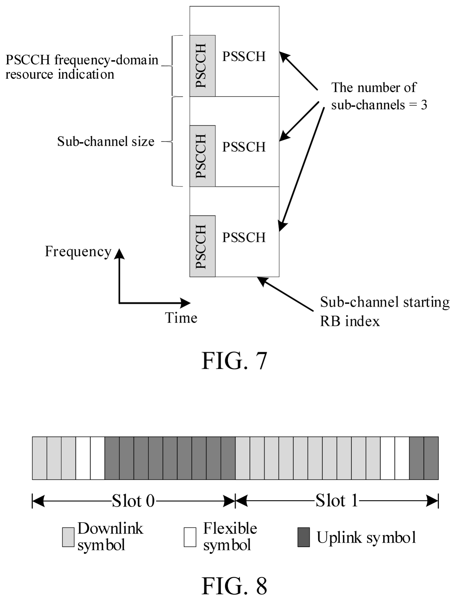

In NR-V2X, frequency domain start positions of first sub-channels of both the PSCCH and the PSSCH associated with the PSCCH are aligned. Therefore, a start position of a sub-channel of each PSSCH is a possible frequency domain start position of the PSCCH. Frequency domain ranges of resource pools of the PSCCH and the PSSCH may be determined based on the above parameters. In one example, frequency domain ranges of the resource pools of the PSCCH and the PSSCH in NR-V2X are as shown in FIG. 7.

In NR-V2X, the PSCCH is used to carry sidelink control information related to resource sensing, including one or more of the following information:

a priority of a scheduled transmission;
a frequency domain resource allocation, indicating the number of frequency domain resources of the PSSCH in a current slot scheduled by the PSCCH, and quantities and start positions of frequency domain resources of at most two reserved retransmission resources;
a time domain resource allocation, indicating time domain positions of at most two retransmission resources;
a reference signal pattern of the PSSCH;
a second-stage SCI format;
a code rate offset of the second-stage SCI;
the number of ports for the PSSCH DMRS;
a modulation and coding scheme (MCS);
an MCS table indication;
the number of PSFCH symbols;
a resource reservation period for reserving a resource used to send another TB in a next period, where if resource reservation between TBs is not activated in the resource pool configuration, the information bit field does not exist; and
reserved bits: 2 bits to 4 bits, and a given number of bits is configured by the network or pre-configured.

Because the PSCCH is always sent in the same slot with the scheduled PSSCH, and a start position of a PRB occupied by the PSCCH is a start position of the first sub-channel of the scheduled PSSCH, the time-frequency domain start position of the scheduled PSSCH is not explicitly indicated in the SCI format 1-A.

### Determination of NR-V2X Time Domain Resource (Slot)

In NR-V2X, transmission of PSCCH/PSSCH is based on a slot level, that is, only one PSCCH/PSSCH can be transmitted in a slot, and transmission of a plurality of PSCCHs/PSSCHs in a slot through TDM is not supported, and PSCCHs/PSSCHs between different users can be multiplexed in a slot through FDM. The time domain resource of the PSSCH in NR-V2X uses a slot as a granularity, but unlike a case that the PSSCH in LTE-V2X occupies all time domain symbols in a subframe, the PSSCH in NR-V2X may occupy some symbols in a slot. This is mainly because in an LTE system, uplink or downlink transmission also uses a subframe as a granularity, and thus sidelink transmission is also at a granularity of a subframe (a special subframe in a TDD system is not used for sidelink transmission). However, a flexible slot structure is adopted in an NR system, that is, a slot includes both an uplink symbol and a downlink symbol, so that more flexible scheduling may be implemented, and a delay may be reduced. A typical subframe of the NR system is shown in FIG. 8, a slot may include a downlink (DL) symbol, an uplink (UL) symbol, and a flexible symbol; and the downlink symbol is located at a start position of the slot, the uplink symbol is located at an end position of the slot, the flexible symbol is located between the downlink symbol and the uplink symbol, and quantities of respective symbols in each slot are all configurable.

The sidelink transmission system may share a carrier with the cellular system, and in this case, the sidelink transmission can use only an uplink transmission resource of the cellular system. For NR-V2X, if sidelink transmission is still required to occupy all time domain symbols in a slot, the network is required to configure a slot of all uplink symbols used for sidelink transmission, which will greatly affect uplink and downlink data transmission of the NR system and reduce the performance of the system. Therefore, in NR-V2X, some time domain symbols in a slot are supported to be used for sidelink transmission, that is, some uplink symbols in a slot are used for sidelink transmission. In addition, considering that the sidelink transmission includes the AGC symbol and the GP symbol, if the number of uplink symbols that can be used for sidelink transmission is small, and after the AGC symbol and the GP symbol are removed, there are fewer remaining symbols that can be used to transmit valid data, and resource utilization is very low. Therefore, the minimum number of time domain symbols occupied by sidelink transmission in NR-V2X is 7 (including the GP symbol). When the sidelink transmission system uses a dedicated carrier, there is no problem of sharing transmission resources with another system, and all symbols in the slot may be configured for sidelink transmission.

As described above, in NR-V2X, a starting point and the length of time domain symbols used for sidelink transmission in a slot are configured by using parameters of a start symbol position (*sl-StartSymbol*) and the number of symbols (*sl-LengthSymbols*), a last symbol in time domain symbols used for side transmission is used as a GP, and the PSSCH and the PSCCH can use only remaining time domain symbols. However, if a PSFCH transmission resource is configured in a slot, the PSSCH and the PSCCH cannot occupy a time domain symbol used for PSFCH transmission, and an AGC symbol and a GP symbol before the symbol.

In the NR-V2X system, the time domain resource of the resource pool is also indicated by a bitmap, and considering the flexible slot structure in the NR system, the length of the bitmap is extended, and a supported length range of the bitmap is [10:160]. A manner of determining a slot position belonging to the resource pool in one SFN period by using the bitmap is the same as that in LTE-V2X, but there are the following two differences:

(1) the total number of slots included in one SFN period is $10240 \times 2^{\mu}$, where the parameter $\mu$ is related to the size of the subcarrier spacing; and

(2) if at least one time domain symbol in the time domain symbols $Y, Y + 1, Y + 2, ..., Y + X - 1$ included in a slot is not configured as an uplink symbol by a TDD-UL-DL-ConfigCommon signaling of the network, the slot cannot be used for sidelink transmission. $Y$ and $X$ represent *sl-StartSymbol and sl-LengthSymbols,* respectively.

Determination of the time domain resource of the resource pool specifically includes the following steps:

Step 1: removing slots that do not belong to the resource pool from the SFN period, including a synchronization slot, a slot that cannot be used for sidelink transmission, and the like. Remaining slots are denoted as a remaining slot set, and the remaining slots are renumbered as $(l_0, l_1, \cdots, l_{(10240 \times 2_\mu - N_{S\_SSB} - N_{nonSL} - 1)})$,
where

$N_{S\_SSB}$ represents the number of synchronization slots in one SFN period; and the synchronization slots are determined based on synchronization-related configuration parameters, and is related to a period for transmitting a SSB, the number of transmission resources of the SSB configured in the period, and the like.

$N_{nonSL}$ represents the number of slots within one SFN period that do not conform to the configured uplink symbol starting point and number of uplink symbols: If at least one time domain symbol in the time domain symbols Y, Y + 1, Y + 2, ..., Y + X - 1 included in a slot is not semi-statically configured as an uplink symbol, the slot cannot be used for sidelink transmission, where $Y$ and $X$ represent sl-StartSymbol and sl-LengthSymbols, respectively.

Step 2: determining the number of reserved slots and corresponding time domain positions.

If the number of slots in the remaining slot set cannot be evenly divided by the length of the bitmap, the number of reserved slots and the corresponding time domain positions need to be determined. Specifically, if a slot $l_r$ ($0 \leq r < 10240 \times 2^{\mu} - N_{S\_SSB} - N_{nonSL}$) satisfies the following condition, the slot is a reserved slot,

$$r = \left\lfloor \frac{m \cdot (10240 \times 2^{\mu} - N_{S\_SSB} - N_{nonSL})}{N_{reserved}} \right\rfloor$$

where
$N_{reserved} = (10240 \times 2^{\mu} - N_{S\_SSB} - N_{nonSL})$ mod $L_{bitmap}$ represents the number of reserved slots, $L_{bitmap}$ represents the length of the bitmap, and m = 0,..., $N_{reserved}$ - 1.

Step 3: removing the reserved slots from the remaining slot set, wherein a set of remaining slots is represented as a logical slot set; and slots in the logical slot set are all slots available for the resource pool, and the slots in the logical slot set are renumbered as $\left(t_0^{SL}, t_1^{SL}, \ldots, t_{T_{max}-1}^{SL}\right)$, where $T_{max} = 10240 \times 2^{\mu}$ - $N_{S\_SSB}$ - $N_{nonSL}$ - $N_{reserved}$.

Step 4: based on the bitmap, determining slots belonging to the resource pool in the logical slot set.

The bitmap in the configuration information of the resource pool is $(b_0, b_1, \ldots, b_{L_{bitmap}-1})$, for the slots

$$t_k^{SL}\left(0 \leq k < \left(10240 \times 2^{\mu} - N_{S\_SSB} - N_{nonSL} - N_{reserved}\right)\right)$$ in the logical slot set, when $b_{k'} = 1$ is

satisfied, the slot is a slot belonging to the resource pool, where $k' = k \bmod L_{bitmap}$.

Step 5: renumbering the slots belonging to the resource pool determined in step 4 sequentially as $t_i'^{SL}$, $i \in \{0, 1, \ldots, T'_{max} - 1\}$, where $T'_{max}$ represents the number of slots included in the resource pool.

**Downlink-Based Positioning**

In downlink-based positioning, downlink positioning reference signal (DL PRS) configurations of four positioning frequency layers may be provided for one terminal at most. The following configuration parameters of the PRS are provided in a parameter structure of each positioning frequency layer:

> a subcarrier spacing of the PRS;
> a cyclic prefix (CP) length of the PRS; and
> a frequency domain resource bandwidth of the PRS: a value of this parameter is the number of PRBs allocated to a PRS signal. A minimum value of the resource bandwidth of the PRS is 24 PRBs, a granularity is 4 PRBs, and a maximum value is 272 PRBs;
> a frequency domain start frequency position of a PRS resource: this parameter defines an index number of a start PRB allocated to a PRS signal in the frequency domain; an index number of the PRB is defined relative to the PointA of the PRS;
> a frequency domain reference point PointA of the PRS; and
> a comb size Comb-N of the PRS.

The parameters of the PRS configured in each positioning frequency layer are applied to all PRS resources included in the positioning frequency layer. That is, in one positioning frequency layer, all PRSs from a plurality of different transmission and receiving points (TRP) are sent on a same frequency sub-band by using a same subcarrier spacing and a same CP length and a same comb size, and occupy exactly a same bandwidth. Such a design can support the terminal to simultaneously receive and measure and send PRSs from a plurality of different TRPs on a same frequency.

Parameters of a TRP layer includes an ID parameter used to uniquely identify a positioning TRP, a physical cell ID of the TRP, an NR cell global identifier (NCGI) of the TRP, and an absolute radio frequency channel number (ARFCN) of the TRP. A maximum of 2 DL PRS resource sets may be configured in each TRP layer. A layer parameter of the DL PRS resource set is configured with the following parameters, and these parameters are applied to all DL PRS resources included in the resource set:

DL PRS resource set identification ID (*nr-DL-PRS-ResourceSetID*);

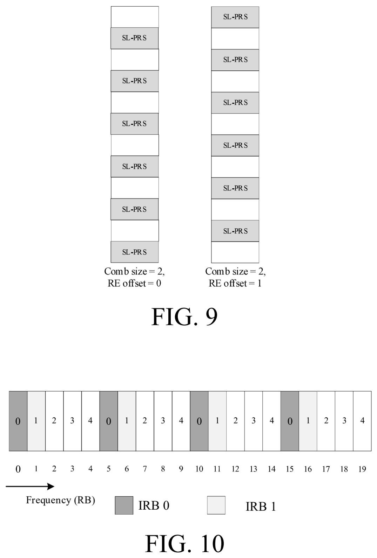

> transmission period and slot offset (*dl-PRS-Periodicity-and-ResourceSetSlotOffset*) of the DL PRS: this parameter defines time domain sending behavior of all DL PRS resources included in the DL PRS resource set; and a minimum value of a configurable DL PRS transmission period is 4 milliseconds and a maximum value is 10240 milliseconds. The configuration of the DL PRS supports flexible subcarrier spacing, including 15 kHz, 30 kHz, 60 kHz and 120 kHz; in a case of different subcarrier spacings, a range of values of the configurable DL PRS transmission period is the same; FIG. 9 shows a schematic diagram of a comb size of 2 and RE offsets of 0 and 1;
> repetition factor of a DL PRS resource (*dl-PRS-ResourceRepetitionFactor*): This parameter defines the number of repeated transmissions of one PRS resource in each PRS period; Repeated transmissions of a same DL PRS resource may be used by the terminal to aggregate energy of a DL PRS signal transmitted multiple times, thereby increasing a coverage distance of the DL PRS and increasing positioning accuracy; in an FR2 system, repeated transmission of the DL PRS resource may be used by the terminal to perform a receiving beam scanning operatio; the terminal may use different receiving beams to receive repeated transmissions of the same DL PRS resource, so as to find the best match between a TRP sending beam and a terminal receiving beam. In addition, repeated transmission of the DL PRS resource will increase the overhead of the PRS; in the specification of 3GPP NR R16, repetition factors of the DL PRS resource are 1, 2, 4, 6, 8, 16, and 32;
> time interval of repeated transmission of the DL PRS resource (*dl-PRS-ResourceTimeGap*): this parameter defines the number of slots between two consecutive repeated transmissions of a same PRS resource;

muting configuration of the DL PRS: this parameter is used to define that the DL PRS signal is not sent on some allocated time-frequency resources (referred to as muting); muting is as follows the DL PRS signal is not sent on all allocated time-frequency resources, but is intentionally not sent on some specified time-frequency resources; a purpose of doing so is not only to avoid conflicts with other signals such as SSBs, but also to avoid interference between signals sent by different TRPs, for example, intentionally turning off DL PRS transmission of aTRP at some time points, so that the terminal can receive a DL PRS signal from a farther TRP. The muting operation of the PRS will be explained in detail in the subsequent description, and will not be repeated here;

the number of time domain symbols occupied by the DL PRS resource (*dl-PRS-NumSymbols*): this parameter defines the number of time domain symbols allocated in a slot for one DL PRS resource.

As described above, all parameters configured in the layer configuration of one DL PRS resource set are applied to all DL PRS resources included in the resource set. Therefore, all DL PRS resources in a same DL PRS resource set are sent at a same period, have the same number of repeated transmissions, and occupy the same number of time domain symbols.

Each DL PRS resource is configured with the following parameters:

a DL PRS resource identification ID (*nr-DL-PRS-ResourceID*);
a sequence ID of the DL PRS (*dl-PRS-Seq terminal nceID*);
a starting frequency domain resource unit offset of the DL PRS (*dl-PRS-CombSizeN-AndReOffset*): this parameter defines a value of a frequency domain resource unit offset used for resource mapping of the DL PRS resource on a first allocated time domain symbol in a slot; based on this parameter and a relative offset value specified in TS38.211, the terminal may determine a value of a frequency domain resource unit offset used for resource mapping on each time domain symbol;
a slot offset of the DL PRS resource (*dl-PRS-ResourceSlotOffset*): this parameter defines the slot offset relative to the DL PRS resource set; this parameter may determine a slot position in which each DL PRS resource is located;
a time domain symbol offset of the DL PRS (*dl-PRS-ResourceSymbolOffset*): this parameter defines a time-frequency resource allocation position of one DL PRS resource in a slot. This parameter indicates an index number of a start time domain symbol in a slot;
QCL information of the DL PRS (*dl-PRS-QCL-Info*): this parameter provides the Quasi Co-Location (QCL) information of the DL PRS signal.

**Sidelink over Unlicensed Spectrum (SI-U)**

When sidelink over unlicensed spectrum (SL-U) is performed, sidelink sending needs to satisfy specific strict regulatory requirements, including requirements of a minimum occupied channel bandwidth (OCB) and a maximum power spectral density (PSD). For the requirement of the OCB, when the terminal uses the channel to perform data transmission, the occupied channel bandwidth is not less than 80% of the bandwidth of one channel; and for the requirement of the maximum power spectral density, a power sent by the terminal on each 1 MHz cannot exceed 10 dBm. To satisfy regulatory requirements of the OCB and the PSD, an interlaced resource block (IRB) structure needs to be adopted for sidelink sending over unlicensed spectrum. One IRB includes $N$ RBs that are discrete in frequency domain, a total of M IRBs are included in a frequency band range, and a RB included in an $m$-th IRB is {m, M+m, 2M+m, 3M+m, ...}.

As shown in FIG. 10, the system bandwidth includes 20 RBs, including 5 IRBs (that is, $M = 5$); each IRB includes 4 RBs (that is, $N = 4$), and two adjacent RBs belonging to a same IRB have a same frequency domain interval, that is, 5 RBs, and numbers in boxes of the figure represent IRB indexes.

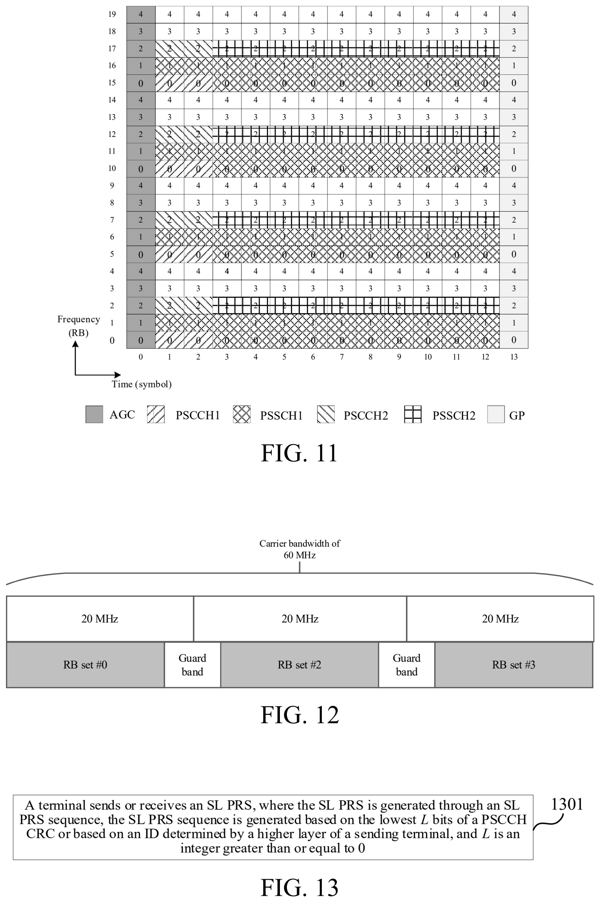

In an SL-U system, if an IRB-based resource allocation granularity is adopted, channels such as the PSCCH and the PSSCH of the SL-U system should be based on an IRB structure. In this case, a frame structure of the SL-U system is as shown in FIG. 11, and numbers in boxes of the figure represent IRB indexes. FIG. 11 is a schematic diagram of a frame structure in which a slot includes only a PSCCH and a PSSCH and does not include a PSFCH. The bandwidth shown in the figure includes 20 RBs, is configured with 5 IRB resources, that is, $M = 5$; and each IRB resource includes 4 RBs, and numbers in boxes represent IRB indexes. In FIG. 11, the system is configured so that the PSCCH occupies 1 IRB resource, the time domain occupies 2 time domain symbols, the PSSCH uses an IRB as a granularity, a first symbol in the slot is an AGC symbol, and a last symbol is a GP symbol. In FIG. 11, PSSCH1 occupies IRB #0 and IRB #1, and PSCCH1 corresponding to PSSCH1 occupies IRB #0. PSSCH2 occupies IRB #2, and PSCCH2 corresponding to PSSCH2 also occupies IRB #2. It should be noted that, for simplicity, resources occupied by the second-stage SCI and resources occupied by the PSCCH DMRS and the PSSCH DMRS are not drawn in the figure.

On the unlicensed spectrum, the terminal accesses a channel through Listen Before Talk (LBT), the LBT uses 20 MHz as a granularity in the frequency domain, each 20 MHz is referred to as an RB set, one carrier may include a plurality of RB sets, and there is a guard period between RB sets, as shown in FIG. 12.

On the unlicensed spectrum, the terminal needs to perform LBT first, and can access a channel only after passing the LBT. However, the time for the terminal to complete the LBT is uncertain. If the terminal is limited to start sending only from a starting point of a slot, the terminal may miss a sending opportunity because the LBT cannot be completed before that. Therefore, it is considered in the SL-U to add a sending starting point in a slot, that is, multi-starting point sending, for example, the additional starting point may be a third or fourth time domain symbol in the slot.

**Sidelink-Based Positioning**

In the related art, research has been conducted on "NR positioning enhancement" and "scenarios and requirements for NR positioning use cases within coverage, within partial coverage, and outside coverage", where the research on "scenarios and requirements for NR positioning use cases within coverage, within partial coverage, and outside coverage" focuses on V2X and public safety use cases. In addition, the related art has established requirements for "ranging-based services" and has established positioning accuracy requirements for Industrial Internet of Things (IIoT) use cases in out-of-coverage scenarios. 3GPP needs to study and develop sidelink positioning solutions to support use cases, scenarios, and requirements identified in these activities.

To improve positioning accuracy, especially to implement positioning of a terminal outside coverage of a cellular network, 3GPP has completed feasibility and performance research on positioning technology based on the SL PRS. Next, solutions based on sidelink positioning (including ranging/direction finding) in the NR system are standardized, including but not limited to:

standardized SL PRS, which uses a comb-based (not excluding a full RE mapping mode) frequency domain structure, adopts a sequence format based on a pseudo-random sequence, uses an existing DL-PRS sequence as a design starting point, and supports a maximum SL PRS bandwidth of 100 MHz in FR1;

resource allocation solutions for standardized SL PRS, including Solution 1 and Solution 2 of resource allocation, where Solution 1 corresponds to a network allocating SL PRS resource and Solution 2 corresponds to a terminal autonomously selecting SL PRS resource. For Solution 2, resource selection based on channel sensing, and/or random resource selection, congestion control, and/or resource selection based on terminal coordination need to be studied and standardized.

Due to the introduction of SL PRS into the sidelink communication system, it is necessary to consider how to transmit SL PRS. Currently, further refinement is required regarding how SL PRS and other physical channels in the sidelink communication system are transmitted in a multiplexed manner. For this reason, the following technical solution of the embodiments of the present application is proposed.

It is to be understood that the terms "system" and "network" herein are often used interchangeably herein. The term "and/or" herein is merely to describe the associations between associated objects, indicating that there can be three kinds of relationships. For example, A and/or B, which may indicate three situations in which A exists alone, A and B exist simultaneously, or B exists alone. In addition, the character "/" herein generally indicates that the associated objects before and after this character are in an "or" relationship. The terms "symbol" and "time domain symbol" are often used interchangeably herein, and optionally, the symbol and the time domain symbol may be OFDM symbols.

To facilitate understanding of the technical solution of the embodiments of the present application, the technical solution of the present application will be described in detail below by means of specific embodiments. The above related techniques can be arbitrarily combined with the technical solution of the embodiments of the present application as optional solutions, all of which fall within the scope of protection of the embodiments of the present application. The embodiments of the present application include at least some of the following content.

It should be noted that the technical solution in the embodiments of the present application is applicable to both licensed spectrum and unlicensed spectrum.

It should be noted that the technical solution in the embodiments of the present application is applicable to SL PRS-based positioning scenarios. In such SL PRS-based positioning scenarios, the SL PRS resource pool supports: a resource pool shared by SL PRS and Rel-16/17/18 sidelink communication and an SL PRS dedicated resource pool. The resource pool shared by SL PRS and Rel-16/17/18 sidelink communication may be understood as: a resource pool shared by SL PRS and PSCCH/PSSCH. The SL PRS dedicated resource pool may be understood as: a resource pool dedicated to SL PRS.

FIG. 13 is a first schematic flow diagram of a sidelink transmission method provided in an embodiment of the present application. As shown in FIG. 13, the sidelink transmission method includes the following steps:

Step 1301: A terminal sends or receives an SL PRS, where the SL PRS is generated through an SL PRS sequence, the SL PRS sequence is generated based on the lowest $L$ bits of a PSCCH CRC or based on an ID determined by a higher layer of a sending terminal, and $L$ is an integer greater than or equal to 0.

Herein, the sending terminal is the terminal that sends the SL PRS. Correspondingly, a receiving terminal is the terminal that receives the SL PRS.

In some implementations, when the SL PRS needs to be used for SL RSRP measurement during a resource sensing process, the SL PRS sequence is generated based on the lowest L bits of the PSCCH CRC; for example, L=12. But the invention is not limited thereto, L may alternatively take other values. In other cases (that is, when the SL PRS does not need to be used for SL RSRP measurement during the resource sensing process), the SL PRS sequence is generated based on the ID determined by the higher layer of the sending terminal.

For example, in the SL PRS dedicated resource pool, if a terminal autonomous resource selection mode is adopted in the resource pool, and the resource pool is configured to use the SL PRS as a measurement reference signal for SL RSRP during the resource sensing process, then the SL PRS needs to be used for SL RSRP measurement during the resource sensing process, and the SL PRS sequence is generated based on the lowest L bits of the PSCCH CRC; and for example, L=12. In other cases, the SL PRS sequence is generated based on the ID determined by the higher layer of the sending terminal.

In some embodiments, in SL PRS-based positioning, whether in the shared resource pool or the SL PRS dedicated resource pool, the SL PRS sequence is generated based on the following formula:

$$r(n) = \frac{1}{\sqrt{2}}\left(1 - 2 \cdot c(2n)\right) + j\frac{1}{\sqrt{2}}\left(1 - 2 \cdot c(2n + 1)\right)$$ , where $c(i)$ is a pseudo-random sequence, which is initialized by $c_{init}$, $c_{init}$ is a function of the slot index of the SL PRS, and the time domain symbol index of the SL PRS, and $n_{ID,seq}^{SL\text{-}PRS}$, and the range of values of $n_{ID,seq}^{SL\text{-}PRS}$ is {0,1, ... ,4095}. It can be seen that the SL PRS sequence is related to $n_{ID,seq}^{SL\text{-}PRS}$, and when the SL PRS needs to be used for SL RSRP measurement during the resource sensing process, $n_{ID,seq}^{SL\text{-}PRS}$ is generated based on the lowest $L$ bits of the PSCCH CRC; for example, L=12. But the invention is not limited thereto, L may alternatively take other values. In other cases (that is, when the SL PRS does not need to be used for SL RSRP measurement during the resource sensing process), $n_{ID,seq}^{SL\text{-}PRS}$ is generated based on the ID determined by the higher layer of the sending terminal.

For example, in the SL PRS dedicated resource pool, if the terminal autonomous resource selection mode is adopted in the resource pool, based on configuration or pre-configuration information of the resource pool, the PSCCH DMRS or the SL PRS may be used as the measurement reference signal for SL RSRP during the resource sensing process; and when the resource pool is configured to use at least the SL PRS as the measurement reference signal for SL RSRP during the resource sensing process, $n_{ID,seq}^{SL\text{-}PRS}$ is generated by the lowest 12 bits of the CRC of the PSCCH that schedules the SL PRS to be sent, for example, $n_{ID,seq}^{SL\text{-}PRS} = \sum_{i=0}^{L-1} p_i \cdot 2^{L-1-i}$, $p_i$ is an $i$-th CRC of the PSCCH that schedules the SL PRS, L=12. Alternatively, $n_{ID,seq}^{SL\text{-}PRS} = \sum_{i=0}^{L-1} p_i \cdot 2^{L-1-i} \mod 2^{12}$, is the $i$-th CRC of the PSCCH that schedules the SL PRS, and L=24, which is the number of bits of the PSCCH CRC. In this way, the terminal performing resource sensing is ensured to be able to measure the SL RSRP through the SL PRS. In other cases, for example, in the resource pool shared by SL PRS and Rel-16/17/18 sidelink communication or in the SL PRS dedicated resource pool, the PSCCH DMRS is used as the measurement reference signal for SL RSRP during the resource sensing process, or a resource allocation technique based on base station scheduling is adopted in the resource pool; and because the SL PRS does not need to be used for resource sensing, $n_{ID,seq}^{SL\text{-}PRS}$ may be indicated by the higher layer of the sending terminal to a physical layer of the terminal, and indicated to the receiving terminal through signaling.

Through the above solution, the generation manner of the SL PRS sequence is clarified, thereby further technically improving SL PRS-based positioning scenarios.

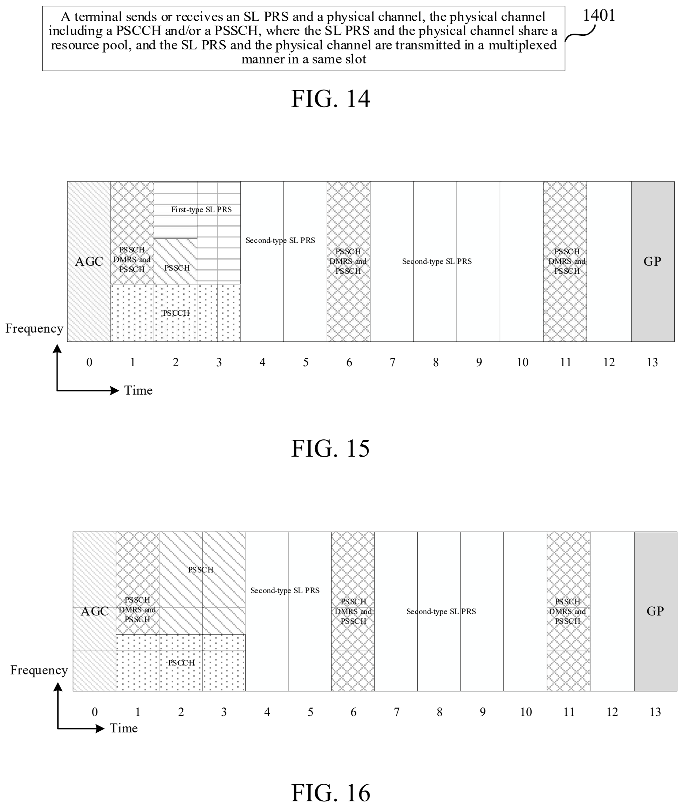

FIG. 14 is a second schematic flow diagram of a sidelink transmission method provided in an embodiment of the present application. As shown in FIG. 14, the sidelink transmission method includes the following steps:

Step 1401: A terminal sends or receives an SL PRS and a physical channel, the physical channel including a PSCCH and/or a PSSCH, where the SL PRS and the physical channel share a resource pool, and the SL PRS and the physical channel are transmitted in a multiplexed manner in a same slot.

Herein, because the PSCCH and/or the PSSCH fall within the scope of Rel-16/17/18 sidelink communication, the sharing of a resource pool between the SL PRS and the physical channel (the PSCCH and/or the PSSCH) may be understood as the SL PRS sharing a resource pool with Rel-16/17/18 sidelink communication.

In this embodiment of the present application, when the SL PRS and the physical channel share a resource pool, the SL PRS and the physical channel may be transmitted in a multiplexed manner in a same slot.

Herein, the SL PRS and the physical channel being transmitted in a multiplexed manner in a same slot may include, but is not limited to, the following cases:

In some implementations, the SL PRS and the PSCCH are transmitted in a multiplexed manner in a same slot, and the SL PRS is scheduled by the PSCCH. That is, The PSCCH and the scheduled SL PRS are transmitted in a multiplexed manner in a slot.

In some implementations, the SL PRS, the PSCCH, and the PSSCH are transmitted in a multiplexed manner in a same slot, and the SL PRS and the PSSCH are scheduled by the PSCCH. That is, The PSCCH and the scheduled SL PRS and PSSCH are transmitted in a multiplexed manner in a slot.

It should be noted that the DMRS corresponding to the PSCCH is referred to as a PSCCH DMRS, and the PSCCH DMRS exists on all PSCCH symbols and is frequency-division multiplexed with the PSCCH on the PSCCH symbols. The PSCCH symbols refer to time domain symbols in which the PSCCH is located. Therefore, it can be understood that the PSCCH DMRS is present in each time domain symbol in which the PSCCH is present. The time domain symbols in which the PSCCH is located are the time domain symbols in which the PSCCH DMRS is located, and the time domain symbols in which the PSCCH DMRS is located are also the time domain symbols in which the PSCCH is located.

It should be noted that the DMRS corresponding to the PSSCH is referred to as the PSSCH DMRS, and the PSSCH DMRS may be present in some or all of PSSCH symbols, and is frequency-division multiplexed with the PSSCH on some or all of PSSCH symbols. The PSSCH symbols refer to time domain symbols in which the PSSCH is located. Therefore, it can be understood that the PSSCH DMRS may or may not be present in a time domain symbol in which the PSCCH is present. The time domain symbols in which the PSSCH DMRS is located must be the time domain symbols in which the PSSCH is located, but the time domain symbols in which the PSSCH is located are not necessarily the time domain symbols in which the PSSCH DMRS is located.

Therefore, it can be understood that the SL PRS and the PSCCH being transmitted in a multiplexed manner in a same slot actually refers to: the SL PRS, the PSCCH, and the PSCCH DMRS being transmitted in a multiplexed manner in a same slot. The SL PRS, the PSCCH, and the PSSCH being transmitted in a multiplexed manner in a same slot actually refers to: the SL PRS, the PSCCH, the PSCCH DMRS, the PSSCH, and the PSSCH DMRS being transmitted in a multiplexed manner in a same slot.

It should be noted that the PSCCH is used to carry first-stage SCI. The PSSCH is used to carry second-stage SCI and/or an SL-SCH.

It should be noted that, for time-frequency resources occupied by the PSCCH and the PSSCH, reference can be made to the above description of the related art.

It should be noted that, in the mapping operation described in the embodiment of the present application, information sent on a first time domain symbol used for sidelink transmission in a slot should be copied to a time domain symbol before the first time domain symbol, and this previous time domain symbol can be understood as an AGC symbol. In some implementations, sidelink transmission includes at least one of the following: a PSSCH, a PSCCH, a PSSCH DMRS, a PSCCH DMRS, an SL PRS, and a PT-RS.

In some implementations, the SL PRS includes a first-type SL PRS and/or a second-type SL PRS;

the first-type SL PRS refers to an SL PRS sent on first-type time domain symbols, and the first-type time domain symbols refer to time domain symbols, in which the PSCCH is located, of the slot ;

the second-type SL PRS refers to an SL PRS sent on second-type time domain symbols, and the second-type time domain symbols refer to time domain symbols, that do not contain the PSCCH and/or a PSSCH DMRS, of the slot.

In some implementations, a comb size of the first-type SL PRS is less than a comb size of the second-type SL PRS.

In some implementations, the comb size of the first-type SL PRS is equal to the comb size of the second-type SL PRS.

For example, the comb size of the first-type SL PRS is equal to 1; and the comb size of the second-type SL PRS is greater than 1.

Herein, the smaller the comb size is, the greater the density of SL PRS distribution in the frequency domain is. When the comb size is equal to 1, the SL PRS is distributed on each RE in the frequency domain. When the comb size is equal to $X$ ($X$ being an integer greater than 1), the SL PRS is distributed on every X-th RE in the frequency domain.

Herein, the terminal sends the SL PRS in at least one of the following manners:

Manner (1) The terminal may send two types of SL PRS, that is, the first-type SL PRS and the second-type SL PRS.

As an optional implementation, when the PSSCH is used to carry only second-stage SCI, the SL PRS includes the first-type SL PRS and the second-type SL PRS. That is, when the PSSCH is used to carry only the second-stage SCI, the terminal may send the first-type SL PRS and the second-type SL PRS.

Manner (2) The terminal may transmit only the first-type SL PRS.

As an optional implementation, when the SL PRS and the PSCCH are transmitted in a multiplexed manner in a same slot, that is, when there is no PSSCH in the slot, the SL PRS includes only the first-type SL PRS.

Manner (3) The terminal may transmit only the second-type SL PRS.

As an optional implementation, when the PSSCH is used to carry the second-stage SCI and an SL-SCH, the SL PRS includes only the second-type SL PRS. That is, when the PSSCH is used to carry the second-stage SCI and the SL-SCH, the terminal may send only the second-type SL PRS.

In an example, as shown in FIG. 15, the following are transmitted in a multiplexed manner in a slot: a PSCCH, a PSCCH DMRS, a PSSCH, a PSSCH DMRS, a first-type SL PRS, and a second-type SL PRS. The PSCCH DMRS is not shown in FIG. 15, and in fact, the PSCCH DMRS and the PSCCH are frequency-division multiplexed on PSCCH symbols (that is, symbols 1, 2, and 3). On symbols 1, 6, and 11, the PSCCH DMRS and the PSSCH are frequency-division multiplexed. The time domain symbols (that is, symbols 2 and 3) in which the first-type SL PRS is located are the time domain symbols in which the PSCCH is located. The time domain symbols (that is, symbols 4, 5, and 7 to 10) in which the second-type SL PRS is located are time domain symbols that do not include the PSCCH and the PSSCH DMRS.

In an example, as shown in FIG. 16, the following are transmitted in a multiplexed manner in a slot: a PSCCH, a PSCCH DMRS, a PSSCH, a PSSCH DMRS, and a second-type SL PRS. The PSCCH DMRS is not shown in FIG. 16, and in fact, the PSCCH DMRS and the PSCCH are frequency-division multiplexed on PSCCH symbols (that is, symbols 1, 2, and 3). On symbols 1, 6, and 11, the PSCCH DMRS and the PSSCH are frequency-division multiplexed. The time domain symbols (that is, symbols 4, 5, and 7 to 10) in which the second-type SL PRS is located are time domain symbols that do not include the PSCCH and the PSSCH DMRS.

Regarding the manner in which the terminal sends the SL PRS, the terminal may determine the SL PRS sending method based on standards specifications (or protocol specifications) or based on configuration information in a resource pool or pre-configuration information in a resource pool.

In some implementations, the time domain symbols used to send the second-type SL PRS are determined in at least one of the following manners: network configuration, pre-configuration, and implementation by the terminal. The implementation by the terminal is as follows: an MAC layer of the terminal determines the time domain symbols used to send the second-type SL PRS, and indicates the time domain symbols to a physical layer of the terminal.

For example, the terminal may determine the time domain symbols used to send the second-type SL PRS based on the configuration information (the configuration information being configured by the network) of the resource pool.

For example, the terminal may determine the time domain symbols used to send the second-type SL PRS based on the pre-configuration information (the pre-configuration information being defined by standards or specified by protocol) of the resource pool.

For example, the physical layer of the terminal determines the time domain symbols used to send the second-type SL PRS based on an indication of the MAC layer.

In some implementations, the time domain symbols used to send the second-type SL PRS satisfy one or more of the following requirements:

When a PSFCH resource is configured in a slot, the last $Y$ time domain symbols in the slot that can be used for sidelink communication cannot be used to send the second-type SL PRS, where $Y$ is an integer greater than zero, and for example, $Y = 4$;

the time domain symbols used to send the second-type SL PRS are: time domain symbols other than the first time domain symbol and/or the last time domain symbol among time domain symbols in the slot which are used for sidelink communication;

the time domain symbols used to send the second-type SL PRS are: time domain symbols that do not include the PSCCH;

the time domain symbols used to send the second-type SL PRS are: time domain symbols that do not include the PSSCH DMRS;

the time domain symbols used to send the second-type SL PRS are: time domain symbols not occupied by second-stage SCI;

the first time domain symbol among the time domain symbols used to send the second-type SL PRS is: time domain symbol $N+n1$, wherein time domain symbol $N$ is the first time domain symbol that does not contain a PSSCH DMRS following the last time domain symbol in which the PSCCH is located, and $n1$ is an integer greater than or equal to zero; and

the time domain symbols used to send the second-type SL PRS are: time domain symbols following time domain symbol $N$ and spaced from any time domain symbol in which a PSSCH DMRS is located by a distance which is equal to or greater than n2, wherein time domain symbol $N$ is the first time domain symbol that does not contain a PSSCH DMRS following the last time domain symbol in which the PSCCH is located, and $n2$ is an integer greater than zero.

The time domain symbols in a slot which are used for sidelink communication may be determined based on the following parameters: a start symbol position (*sl-startSLsymbols*) and the number of symbols (*sl-lengthSLsymbols*), and for *sl-startSLsymbols* and *sl-lengthSLsymbols*, reference may be made to the above description of the related art.

It should be noted that the requirements satisfied by the time domain symbols used to send the second-type SL PRS may be combined arbitrarily, or may be implemented separately, and the terminal may determine the time domain symbols used to send the second-type SL PRS based on the above requirements. As some optional real-time methods, several manners of determining the time domain symbols used to send the second-type SL PRS are provided below:

Manner (1) The time domain symbols used to send the second-type SL PRS are: sidelink communication time domain symbols in a slot, excluding the first and last symbols, that neither contain the PSSCH DMRS nor are occupied by the second-stage SCI.

Manner (2) The time domain symbols used to send the second-type SL PRS are: sidelink communication time domain symbols in a slot, excluding the first and last symbols, that do not include the PSCCH or the PSSCH DMRS.

Manner (3) The time domain symbols used to send the second-type SL PRS are indicated by configuration information or pre-configuration information, where the configuration information or the pre-configuration information directly or indirectly indicates the indexes of the time domain symbols available for sending the second-type SL PRS; and for different SL PRS priorities, the number of time domain symbols available for sending the second-type SL PRS may vary.

Manner (4) The time domain symbols used to send the second-type SL PRS are determined by the MAC layer of the terminal and are indicated by the MAC layer to the physical layer of the terminal, where the time domain symbols used to send the second-type SL PRS determined by the MAC layer of the terminal satisfy the following requirements: the first time domain symbol used to send the second-type SL PRS is: time domain symbol $N+n1$, where time domain symbol $N$ is the first time domain symbol that does not contain a PSSCH DMRS following the last time domain symbol in which the PSCCH is located, and the last time domain symbol in the slot available for sidelink communication cannot be used to send the second-type SL PRS; and $n1$ is an integer greater than or equal to 0, and the value of $n1$ may be configured by the network, pre-configured, or determined by the MAC layer of the terminal.

Manner (5) The time domain symbols used to send the second-type SL PRS are: time domain symbols following time domain symbol $N$ and spaced from any time domain symbol in which a PSSCH DMRS is located by a distance which is equal to or greater than n2, wherein time domain symbol $N$ is the first time domain symbol that does not contain a PSSCH DMRS following the last time domain symbol in which the PSCCH is located, $n2$ is an integer greater than zero, and the value of n2 may be configured by the network, pre-configured, or determined by the MAC layer of the terminal.

For example, in the example shown in FIG. 16, the PSSCH DMRS is present on symbols 1, 6, and 11, and if the value of $n2$ is equal to 2, then symbols 4, 8, and 9 are the time domain symbols used to send the second-type SL PRS.

According to Manner (5), time domain symbols close to the PSSCH DMRS may be used for sending the PSSCH, thereby improving the demodulation success rate of the PSSCH.

In some implementations, the number of time domain symbols in a slot which are used to send the second-type SL PRS is related to the number of ports for the PSSCH DMRS.

For example, when the number of ports for the PSSCH DMRS sent by the terminal is 1, the number of time domain symbols available for sending the second-type SL PRS may be less than when the number of ports for the PSSCH DMRS is 2. For example, when the number of ports for the PSSCH DMRS sent by the terminal is 1, the number of time domain symbols available for sending the second-type SL PRS may be 0, whereas when the number of ports for the PSSCH DMRS is 2, the number of time domain symbols available for sending the second-type SL PRS may be greater than 0. It should be noted that when the number of ports for the PSSCH DMRS is 1, the PSSCH DMRS may be used to obtain positioning-related measurements, such as signal arrival time and channel arrival angle; and in this way, transmissions of the second-type SL PRS can be reduced, and more resources are used to send the PSSCH, thereby increasing resource utilization efficiency.

In some implementations, the terminal determines a comb size of the second-type SL PRS, and an RE offset corresponding to the first time domain symbol among the time domain symbols used to send the second-type SL PRS.

In some implementations, based on standards specifications (or protocol specifications) or configuration information in the resource pool or pre-configuration information in the resource pool, the terminal may determine the comb size of the second-type SL PRS and the RE offset corresponding to the first time domain symbol among the time domain symbols used to send the second-type SL PRS.

In some implementations, the comb size of the second-type SL PRS may be determined in the following manners:

Manner (1) The comb size of the second-type SL PRS is determined by the MAC layer of the terminal and is indicated by the MAC layer to the physical layer of the terminal.

Herein, the comb size of the second-type SL PRS is determined by the MAC layer of the terminal from the allowed comb sizes. For example, if the comb sizes allowed by the standards or allowed in the resource pool are 1, 2, 4, and 6, then the MAC layer of the terminal selects a specific comb size to be used therefrom; for example, the comb size selected from the set by the MAC layer of the terminal is 4.

Manner (2) The comb size of the second-type SL PRS is specified by protocol as: the maximum value among allowed comb sizes that is less than or equal to the number of time domain symbols in the slot which are used to send the second-type SL PRS. For example, if the number of time domain symbols in the slot used to send the second-type SL PRS is 3, and the comb sizes allowed by the standards or allowed in the resource pool are 1, 2, 4, and 6, then the comb size is 2.

In some implementations, the RE offset corresponding to the first time domain symbol among the time domain symbols used to send the second-type SL PRS may be determined in the following manner:

Manner (1) The RE offset corresponding to the first time domain symbol is determined by the MAC layer of the terminal and is indicated by the MAC layer to the physical layer of the terminal.

Herein, the RE offset corresponding to the first time domain symbol is selected by the MAC layer of the terminal from a first range, and the first range is determined based on the comb size of the second-type SL PRS. For example, the first range is $[0, K_{\text{comb}}^{\text{PRS}} - 1]$, and $K_{\text{comb}}^{\text{PRS}}$ represents the comb size of the second-type SL PRS.

Manner (2) The RE offset corresponding to the first time domain symbol is determined by the physical layer of the terminal.

Herein, the RE offset corresponding to the first time domain symbol is selected by the physical layer of the terminal from a first range, and the first range is determined based on the comb size of the second-type SL PRS. For example, the first range is $[0, K_{\text{comb}}^{\text{PRS}} - 1]$, and $K_{\text{comb}}^{\text{PRS}}$ represents the comb size of the second-type SL PRS.

It should be noted that the foregoing manners of determining the comb size and the foregoing manners of determining the RE offset may be arbitrarily combined. As some optional real-time methods, several combination manners are provided below:

Manner (1) The comb size $K_{\text{comb}}^{\text{PRS}}$ of the second-type SL PRS is determined by the MAC layer of the terminal and indicated by the MAC layer to the physical layer of the terminal However, the RE offset $k_{\text{offset}}^{\text{PRS}}$ corresponding to the first time domain symbol is selected by the physical layer of the terminal from the range of $[0, K_{\text{comb}}^{\text{PRS}} - 1]$.

For example, the comb size $K_{\text{comb}}^{\text{PRS}}$ is determined by the MAC layer of the terminal from the comb sizes allowed by the standards or from the comb sizes allowed in the resource pool. The RE offset $k_{\text{offset}}^{\text{PRS}}$ is randomly selected by the physical layer of the terminal from the range of $[0, K_{\text{comb}}^{\text{PRS}} - 1]$.

Manner (2) The comb size $K_{\text{comb}}^{\text{PRS}}$ of second-type SL PRS and the RE offset $k_{\text{offset}}^{\text{PRS}}$ corresponding to the first time domain symbol are both determined by the MAC layer of the terminal and indicated by the MAC layer to the physical layer of the terminal.

Manner (3) The comb size $K_{\text{comb}}^{\text{PRS}}$ of the second-type SL PRS is the maximum value among comb sizes allowed by standards or allowed in the resource pool that is less than or equal to the number of time domain symbols in the slot which are used to send the second-type SL PRS; and However, the RE offset $k_{\text{offset}}^{\text{PRS}}$ corresponding to the first time domain symbol is selected by the physical layer of the terminal from the range of $[0, K_{\text{comb}}^{\text{PRS}} - 1]$.

Further, after the RE offset corresponding to the first time domain symbol among the time domain symbols used to send the second-type SL PRS is determined, RE offsets corresponding to other time domain symbols following the first time domain symbol may be determined based on the RE offset. Assuming that the number of time domain symbols used to send the second-type SL PRS in a slot is R, the R time domain symbols are arranged in an ascending order based on the indexes of the time domain symbols, and the corresponding order indexes after the arrangement are sequentially $0 \leq d \leq M - 1$, then the RE offset corresponding to the d-th time domain symbols used to send the second-type SL PRS is

$$\left(k_{\text{offset}}^{\text{PRS}} + k'\right) \bmod K_{\text{comb}}^{\text{PRS}}$$, where the value of $k'$ is determined based on $d$ and Table 3 below, and the Table 3 below provides correspondences between $k'$ and $d$.

Table 3

| $K_{comb}^{PRS}$ | d | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

When multiplexed transmission for sidelink communication is performed in the same slot, there is a constraint after AGC adjustment, that is, the receiving terminal assumes that the transmit powers on all time domain symbols in the slot are the same. For example, only the PSCCH is sent on symbols 1, 2, and 3 in a slot; because the PSCCH occupies a part of the frequency domain resources corresponding to the symbols, and if subsequent information occupies all the frequency domain resources corresponding to the symbols, in order to ensure that transmit powers on the symbols are the same, it is necessary to increase a transmit power of the PSCCH on each RE. When the terminal detects that the transmit power on the RE of the PSCCH is relatively high, the terminal will think that the transmit power on the entire symbol occupied by the PSCCH is relatively high, resulting in inaccurate measurement results during the resource sensing process. When the terminal makes resource selection, resources with higher transmit power will be excluded, even though, due to the measurement error, those resources actually should not be excluded. The terminal herein refers to a backward-compatible terminal, that is, a terminal compliant with 3GPP Rel-17 or earlier versions.

To ensure measurement accuracy during the resource sensing process, the transmit power in a slot satisfies some requirements.

In some implementations, when at least the PSCCH DMRS is used as a measurement reference signal during the resource sensing process in the resource pool, the transmit power in the slot satisfies at least one of the following requirements:

transmit powers on time domain symbols in the slot except for time domain symbols in which a GP is located are all $P$;
a transmit power on an RE, in which the PSCCH DMRS, of the slot is located is $P/K$; and
a transmit power on time domain symbols, in which the PSCCH is located, of the slot is $P$,
wherein $P$ is the transmit power on the time domain symbols in the slot except for the time domain symbols in which the GP is located, and $K$ is the total number of REs included in a resource range allocated or selected for the terminal.

In some implementations, when at least a PSSCH DMRS is used as a measurement reference signal during the resource sensing process in the resource pool, the transmit power in the slot satisfies at least one of the following requirements:

transmit powers on time domain symbols in the slot except for time domain symbols in which a GP is located are all $P$;
a transmit power on an RE in the slot in which the PSSCH DMRS is located is $P/K$; and
a transmit power on time domain symbols in the slot in which the PSSCH DMRS is located is $P$,
wherein $P$ is the transmit power on the time domain symbols in the slot except for the time domain symbols in which the GP is located, and $K$ is the total number of REs included in a resource range allocated or selected for the terminal.

It should be noted that the transmit power on a time domain symbol indicates the sum of transmit powers on all REs corresponding to the time domain symbol. Herein, all the REs corresponding to the time domain symbol are REs included in the resource range allocated or selected for the terminal on the time domain symbol.

In a slot, for all time domain symbols used for sidelink communication except for the last GP symbol, the transmit powers of the terminal on those time domain symbols are all $P$ (milliwatts), where $P$ is determined by the terminal based on a power control manner configured in the resource pool, a congestion control manner, related path loss measured by the terminal, and the like.

When at least the PSCCH DMRS is used as a measurement reference signal for SL RSRP during the resource sensing process in the resource pool, the terminal ensures that a transmit power on each RE in which the PSCCH DMRS is located is *P/K,* where K is the total number of REs included within a resource range allocated or selected for the terminal. Furthermore, if other REs (that is, REs other than the REs occupied by the PSCCH DMRS and the PSCCH) on the PSCCH symbol are not occupied, the terminal should increase the transmit power of REs on which first-stage SCI modulation symbols are located, to ensure that the transmit power on the PSCCH symbol is *P*. Alternatively, the terminal may send other content, such as the PSSCH and/or the first-type SL PRS, on the other REs (that is, REs other than the REs occupied by the PSSCH DMRS) on the PSCCH symbol, thereby occupying the other REs entirely to ensure that the transmit power on the PSSCH symbol is *P*. In this way, resource sensing by backward-compatible terminals can be supported.

Similarly, when at least the PSSCH DMRS is used as a measurement reference signal for SL RSRP during the resource sensing process in the resource pool, the terminal ensures that a transmit power on each RE in which the PSSCH DMRS is located is *P/K*, where *K* is the total number of REs included within a resource range allocated or selected for the terminal. Furthermore, the terminal may send the PSSCH on the other REs (that is, REs other than the REs occupied by the PSSCH DMRS) on the PSSCH symbol, thereby occupying the other REs entirely to ensure that the transmit power on the PSSCH symbol is *P*. In this way, resource sensing by backward-compatible terminals can be supported.

It should be noted that the backward-compatible terminal described in this embodiment of the present application may refer to a terminal compliant with 3GPP Rel-17 or earlier versions.

Continuing from the above, in some implementations, when at least the PSCCH DMRS is used as a measurement reference signal during the resource sensing process in the resource pool, the time domain symbols in which the PSCCH is located include the PSSCH and/or the first-type SL PRS. REs occupied by the PSSCH and/or the first-type SL PRS are REs within a first portion of REs excluding a second portion of REs, the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located. In this way, all REs in the resource range allocated or selected for the terminal on the time domain symbols where the PSCCH is located can be occupied entirely.

Herein, the PSSCH may be used to carry the second-stage SCI and/or the SL-SCH. In some implementations, when the PSSCH is used to carry only the second-stage SCI, the time domain symbols in which the PSCCH is located include the PSSCH and the first-type SL PRS. In some implementations, when the PSSCH is used to carry the second-stage SCI and the SL-SCH, the time domain symbols in which the PSCCH is located include the PSSCH.

According to the foregoing solution, the terminal can ensure that the transmit power on the time domain symbols in which the PSCCH is located is the same as the transmit power on other time domain symbols without needing to increase the transmit powers of the PSCCH DMRS and the PSCCH, thereby avoiding the impact on resource sensing by backward-compatible terminals.

As an embodiment, to simplify system design, the terminal sends the PSSCH and/or the first-type SL PRS on the time domain symbols in which the PSCCH is located, so that all REs in the resource range allocated or selected for the terminal on the time domain symbols in which the PSCCH is located are occupied entirely.

As another embodiment, when the PSCCH DMRS is used as the measurement reference signal for SL RSRP during the resource sensing process in the resource pool, the terminal sends the PSSCH and/or the first-type SL PRS on the time domain symbols in which the PSCCH is located, so that all REs in the resource range allocated or selected for the terminal on the time domain symbols in which the PSCCH is located are occupied entirely. However, when the PSSCH DMRS is used as the measurement reference signal for SL RSRP during the resource sensing process in the resource pool, on the time domain symbols on which the PSCCH is located, the terminal may occupy only some REs in the resource range allocated or selected on the time domain symbols.

In some implementations, when the time domain symbols in which the PSCCH is located include the PSSCH, it may be understood that: on the time domain symbols in which the PSCCH is located, the terminal sends the PSSCH with the purpose of entirely occupying the REs on the time domain symbols in which the PSCCH is located. This may be implemented in the following manner:

The terminal performs rate matching and/or repeated mapping on the PSSCH until the PSSCH occupies REs within a first portion of REs excluding a second portion of REs, wherein the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located.

Herein, for the PSSCH used to carry only the second-stage SCI, it is more suitable to occupy the REs in a repeated mapping manner.

Herein, for the PSSCH carrying the second-stage SCI and the SL-SCH, it is more suitable to occupy the REs in a rate matching manner, and certainly, the REs may alternatively be occupied in a repeated mapping manner.

In an example, when the terminal performs rate matching on the PSSCH, it is ensured that the PSSCH can occupy all REs within a resource range allocated or selected for the terminal on the mapped time domain symbols. When at least the PSCCH DMRS is used as the measurement reference signal for SL RSRP during the resource sensing process in the resource pool, the mapped time domain symbols include at least the time domain symbols in which the PSCCH is located.

In an example, the terminal performs repeated mapping on the PSSCH until all REs within a resource range allocated or selected for the terminal that are on the mapped time domain symbols are occupied. When at least the PSCCH DMRS is used as the measurement reference signal for SL RSRP during the resource sensing process in the resource pool, the mapped OFDM symbols include at least the time domain symbols in which the PSCCH is located.

Continuing from the above, in some implementations, when at least the PSSCH DMRS is used as the measurement reference signal during the resource sensing process in the resource pool, the time domain symbols in which the PSSCH DMRS is located includes the PSSCH. REs occupied by the PSSCH are REs within a third portion of REs excluding a fourth portion of REs, the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located. In this way, all REs in the resource range allocated or selected for the terminal on the time domain symbols in which the PSSCH DMRS is located may be occupied entirely.

Herein, the PSSCH may be used to carry the second-stage SCI and/or the SL-SCH.

According to the foregoing solution, the terminal can ensure that the transmit power on the time domain symbols in which the PSSCH DMRS is located is the same as the transmit power on other time domain symbols without needing to increase the transmit power of the PSSCH DMRS, thereby avoiding the impact on resource sensing by backward-compatible terminals.

As an embodiment, to simplify system design, the terminal sends the PSSCH on the time domain symbols in which the PSSCH DMRS is located, so that all REs in the resource range allocated or selected for the terminal on the time domain symbols in which the PSSCH DMRS is located are occupied entirely.

As another embodiment, when the PSSCH DMRS is used as the measurement reference signal for SL RSRP during the resource sensing process in the resource pool, the terminal sends the PSSCH on the time domain symbols in which the PSSCH DMRS is located, so that all REs in the resource range allocated or selected for the terminal on the time domain symbols in which the PSSCH DMRS is located are occupied entirely. However, when the PSCCH DMRS is used as the measurement reference signal for SL RSRP during the resource sensing process in the resource pool, on the time domain symbols in which the PSSCH DMRS is located, the terminal may occupy only some REs in the resource range allocated or selected on the time domain symbols.

In some implementations, when the time domain symbols in which the PSSCH DMRS is located include the PSSCH, it may be understood that: on the time domain symbols in which the PSSCH DMRS is located, the terminal sends the PSSCH with the purpose of entirely occupying the REs on the time domain symbols in which the PSSCH DMRS is located. This may be implemented in the following manner: The terminal performs rate matching and/or repeated mapping on the PSSCH until the PSSCH occupies REs within a third portion of REs excluding a fourth portion of REs, wherein the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located.

Herein, for the PSSCH used to carry only the second-stage SCI, it is more suitable to occupy the REs in a repeated mapping manner.

Herein, for the PSSCH carrying the second-stage SCI and the SL-SCH, it is more suitable to occupy the REs in a rate matching manner, and certainly, the REs may alternatively be occupied in a repeated mapping manner.

In the foregoing solution, the first-type SL PRS helps to ensure that each RE on the time domain symbols in which the PSCCH is located has the same transmit power, thereby reducing the impact on resource sensing by backward-compatible terminals.

In some implementations, if the terminal sends the PSSCH and the SL PRS in a same slot (that is, the SL PRS and the PSSCH are transmitted in a multiplexed manner in a same slot), the PSSCH includes at least the second-stage SCI, and optionally, may include the SL-SCH. If the PSSCH includes the SL-SCH, the terminal may determine a transport block size (TBS) of transport blocks carried in the PSSCH based on time domain symbols available for sending the PSSCH and an available RE on each time domain symbol.

In some implementations, the terminal determines the TBS of transport blocks carried in the PSSCH, wherein the TBS is related to a first parameter, the first parameter is related to a second parameter, the first parameter represents the number of reference REs available for the PSSCH among PRBs occupied by the PSSCH, and the second parameter represents the number of reference REs available for the PSSCH within one PRB, where

if time domain symbols occupied by the PSSCH and the SL PRS are different, then the second parameter is related to a third parameter, the third parameter representing the number of symbols occupied by the SL PRS and/or the number of symbols used to support PSFCH transmission; or
if time domain symbols occupied by the PSSCH and the SL PRS are at least partially the same, then the second parameter is related to a fourth parameter, the fourth parameter representing the number of REs occupied by the SL PRS.

As an example, the first parameter may be represented as $N_{RE}$, the second parameter may be represented as $N'_{RE}$, the third parameter may be represented as $N_{symb}^{SL-PRS}$, and the fourth parameter may be represented as $N_{RE}^{SL-PRS}$.

In some implementations, the third parameter may be determined in the following manner:

If no PSFCH resource is configured in the resource pool, then the third parameter represents the number of time domain symbols in a slot which are used for the second-type SL PRS; or if a PSFCH resource is configured in the resource pool, then the value of the third parameter is M - f, where M represents the number of time domain symbols in the slot which are used to send the second-type SL PRS, f represents the number of the last F time domain symbols in the slot which are available for sidelink communication among the M time domain symbols, $0 \leq f \leq F - 1$, and F is an integer greater than or equal to 1. As an example, F = 4.

In some implementations, the fourth parameter may be determined in the following manner:

The fourth parameter is $M' \times N_{sc}^{RB} \div K_{comb}^{PRS}$, where M' is a fifth parameter, $N_{sc}^{RB}$ represents the number of subcarriers within one PRB, and $K_{comb}^{PRS}$ represents a comb size of the SL PRS. If no PSFCH resource is configured in the resource pool, then the value of M' is M; if a PSFCH resource is configured in the resource pool, then the value of M' is M - f; M represents the number of time domain symbols in the slot which are used to send the second-type SL PRS, f represents the number of the last F time domain symbols in the slot which are available for sidelink communication among the M time domain symbols, $0 \leq f \leq F - 1$, and F is an integer greater than or equal to 1. As an example, F = 4.

In one example, the TBS of transport blocks carried in the PSSCH is determined based on $N_{RE}$ (that is, the first parameter), and $N_{RE}$ represents the number of reference REs available for the PSSCH among PRBs occupied by the PSSCH; $N_{RE}$ may be determined via the following formula:

$$N_{RE} = N'_{RE} \cdot n_{PRB} - N_{RE}^{SCI,1} - N_{RE}^{SCI,2}$$

$n_{PRB}$ is the number of PRBs occupied by the PSSCH. $N_{RE}^{SCI,1}$ is the number of REs occupied by the first-stage SCI (including REs occupied by the PSCCH DMRS). $N_{RE}^{SCI,2}$ is the number of REs occupied by the second-stage SCI assuming $\gamma = 0$, where $\gamma$ is the number of REs added in a rate matching process for the second-stage SCI to ensure that the second-stage SCI occupies a complete PRB. $N'_{RE}$ (that is, the second parameter) represents the number of reference REs available for the PSSCH within one PRB.

If the PSSCH and the SL PRS occupy different time domain symbols, $N'_{RE}$ is determined via the following formula:

$$N'_{RE} = N_{sc}^{RB}\left(N_{symb}^{sh} - N_{symb}^{PSFCH} - N_{symb}^{SL-PRS}\right) - N_{oh}^{PRB} - N_{RE}^{DMRS}$$

If the PSSCH and the SL PRS can occupy different REs in the same time domain symbol, $N'_{RE}$ is determined via the following formula:

$$N'_{RE} = N_{sc}^{RB}\left(N_{symb}^{sh} - N_{symb}^{PSFCH}\right) - N_{oh}^{PRB} - N_{RE}^{DMRS} - N_{RE}^{SL-PRS}$$

where

$N_{sc}^{RB} = 12$, representing the number of subcarriers within one PRB;

$N_{symb}^{sh}$ represents the number of symbols available for sidelink in a slot as configured by a RRC layer minus 2, that is, excluding the last GP symbol and the first symbol used for AGC;

$N_{symb}^{PSFCH}$ 0 or 3, which is a reference value for the number of symbols occupied by the PSFCH, and the specific value is indicated by the "number of PSFCH symbols" field in the first-stage SCI; the reason for adopting the reference value instead of the actual number of symbols used for the PSFCH in a current slot is the same as that in the second-stage SCI rate matching, that is, finally determined TBSs are different due to variations in PSFCH resources in different slots;

the value of $N_{oh}^{PRB}$ is configured by RRC layer parameters and is used to represent the reference value of the quantity of REs occupied by a PT-RS and a CSI-RS, and optional values are {0, 3, 6, 9};

$N_{RE}^{DMRS}$ represents the average number of DMRS REs (that is, REs in which the DMRS is located) in a slot, and is related to a DMRS pattern allowed in the resource pool, as shown in Table 4 below. Herein, the average number of DMRS REs is adopted instead of the actual number of DMRS REs to ensure that the determined TBSs are the same when the DMRS pattern changes; and

for $N_{symb}^{SL-PRS}$ (that is, the third parameter): if no PSFCH resource is configured in the resource pool, $N_{symb}^{SL-PRS}$ represents the number of time domain symbols in the slot which are used for the second-type SL PRS; and if a PSFCH resource is configured in the resource pool, then $N_{symb}^{SL-PRS} = M - f$, where M represents the number of time domain symbols in the slot which are used to send the second-type SL PRS, and $0 \leq f \leq 3$, which represents the number of the last four time domain symbols in the slot which are available for sidelink communication among the above *M* OFDM symbols. For example, in FIG. 16, M = 7, and time domain symbols 10 and 12 are located in the last four time domain symbols in the slot which are available for sidelink communication. Therefore, when no PSFCH is configured in the resource pool, $N_{symb}^{SL-PRS} = 7$; otherwise, it is equal to 5.

For $N_{RE}^{SL-PRS}$ (that is, the fourth parameter): $N_{RE}^{SL-PRS} = M' \times N_{sc}^{RB} \div K_{comb}^{PRS}$, if no PSFCH resource is configured in the resource pool, M' = M; and if a PSFCH resource is configured in the resource pool, then M' = M - f, where M represents the number of time domain symbols in the slot which are used to send the second-type SL PRS, and $0 \leq f \leq 3$, which represents the number of the last four time domain symbols in the slot which are available for sidelink communication among the above *M* time domain symbols. $K_{comb}^{PRS}$ represents the comb size of the SL PRS.

Table 4

| The number of DMRS symbols in a slot | $N_{RE}^{DMRS}$ |
|---|---|
| {2} | 12 |
| {3} | 18 |
| {4} | 24 |
| {2,3} | 15 |
| {2.4} | 18 |
| {3.4} | 21 |
| {2, 3, 4} | 18 |

In some implementations, during retransmission of a same TB, if time domain symbols occupied by the PSSCH and the SL PRS are different, then the terminal determines that the number of time domain symbols occupied by an SL PRS sent together with the TB remains unchanged; and if the time domain symbols occupied by the PSSCH and the SL PRS are at least partially the same, then the terminal determines that the number of time domain symbols occupied by an SL PRS sent together with the TB and a comb size of the SL PRS remain unchanged.

Herein, during retransmission of a same TB, if the PSSCH and the SL PRS occupy different time domain symbols, the sending terminal should ensure that the number of time domain symbols occupied by the SL PRS sent together with the TB remains unchanged; and if the PSSCH and the SL PRS may occupy different REs in the same time domain symbol, the sending terminal should ensure that the number of time domain symbols occupied by the SL PRS sent together with the TB and the comb size of the SL PRS remain unchanged, thereby ensuring that the TBSs determined by the receiving terminal and the sending terminal are the same.

In the technical solution of the embodiments of the present application, when the SL PRS and the physical channel share a resource pool, the method for multiplexing the SL PRS and the physical channel in the same slot is specified, so as to achieve effective multiplexing of the SL PRS and the physical channel in the same slot, thereby ensuring backward compatibility and resource utilization.

Preferred embodiments of the present application are described in detail above with reference to the drawings, but the present application is not limited to specific details in said embodiments. Within the scope of the technical concept of the present application, a variety of simple variations may be made to the technical solution of the present application, and these simple variations all fall within the scope of protection of the present application. For example, various specific technical features described in the above specific implementations may be combined by using any suitable means without contradictions. To avoid unnecessary repetition, the present application no longer describes the various possible combinations. In another example, any combination of different implementations of the present application may also be made, as long as the same does not violate the idea of the present application, which should likewise be considered content disclosed in the present application. For another example, insofar as there are no conflicts, the various embodiments described in the present application and/or the technical features in the various embodiments may be arbitrarily combined with the prior art, and the technical solutions obtained after the combination should also fall within the scope of protection of the present application.

It should be understood that in various method embodiments of the present application, the size of the sequence numbers of various processes described above does not imply the order of execution, and the order of execution of various processes should be determined by functions and internal logic thereof, and should not constitute any limitation on the implementation process of the embodiments of the present application. In addition, in the embodiments of the present application, the terms "downlink", "uplink" and "sidelink" are used to denote the transmission direction of a signal or data, wherein "downlink" is used to indicate that the transmission direction of the signal or data is a first direction of sending from a station to a user equipment of a cell, "uplink" is used to indicate that the transmission direction of the signal or data is a second direction of sending from the user equipment of the cell to the station, and "sidelink" is used to indicate that the transmission direction of the signal or data is a third direction of sending from user equipment 1 to user equipment 2. For example, a "downlink signal" indicates that the transmission direction of the signal is the first direction. In addition, in the embodiments of the present application, the term "and/or" herein is merely to describe the associations of associated objects, indicating that there may be three kinds of relationships. Specifically, A and/or B may represent: three situations in which A exists alone, A and B exist simultaneously, or B exists alone. In addition, the character "/" herein generally indicates that the associated objects before and after this character are in an "or" relationship.

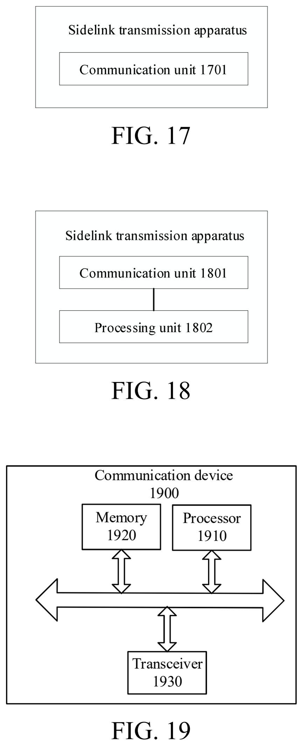

FIG. 17 is a first schematic diagram of the structural composition of a sidelink transmission apparatus according to an embodiment of the present application. As shown in FIG. 17, the sidelink transmission apparatus is applied to a terminal. As shown in FIG. 17, the sidelink transmission apparatus includes:

a communication unit 1701, configured to send or receive an SL PRS, where the SL PRS is generated through an SL PRS sequence, the SL PRS sequence is generated based on the lowest $L$ bits of a PSCCH CRC or based on an ID determined by a higher layer of a sending terminal, and $L$ is an integer greater than or equal to 0.

In some implementations, when the SL PRS needs to be used for SL RSRP measurement during a resource sensing process, the SL PRS sequence is generated based on the lowest $L$ bits of the PSCCH CRC; for example, $L=12$. But the invention is not limited thereto, $L$ may alternatively take other values. In other cases (that is, when the SL PRS does not need to be used for SL RSRP measurement during the resource sensing process), the SL PRS sequence is generated based on the ID determined by the higher layer of the sending terminal.

It should be understood by a person skilled in the art that the relevant description of the above sidelink transmission apparatus in the embodiments of the present application may be understood with reference to the relevant description of the sidelink transmission method in the embodiments of the present application.

FIG. 18 is a second schematic diagram of the structural composition of a sidelink transmission apparatus according to an embodiment of the present application. As shown in FIG. 18, the sidelink transmission apparatus is applied to a terminal. As shown in FIG. 18, the sidelink transmission apparatus includes:

a communication unit 1801, configured to send or receive an SL PRS and a physical channel, where the physical channel includes a PSCCH and/or a PSSCH; and where the SL PRS and the physical channel share a resource pool, and the SL PRS and the physical channel are transmitted in a multiplexed manner in a same slot.

In some implementations, the SL PRS includes a first-type SL PRS and/or a second-type SL PRS;

the first-type SL PRS refers to an SL PRS sent on first-type time domain symbols, and the first-type time domain symbols refer to time domain symbols, in which the PSCCH is located, of the slot ;

the second-type SL PRS refers to an SL PRS sent on second-type time domain symbols, and the second-type time domain symbols refer to time domain symbols, that do not contain the PSCCH and/or a PSSCH DMRS, of the slot; and the PSSCH DMRS is a DMRS corresponding to the PSSCH.

In some implementations, a comb size of the first-type SL PRS is less than a comb size of the second-type SL PRS.

In some implementations, when the PSSCH is used to carry only second-stage SCI, the SL PRS includes the first-type SL PRS and the second-type SL PRS; or when the PSSCH is used to carry second-stage SCI and an SL-SCH, the SL PRS includes only the second-type SL PRS.

In some implementations, when at least the PSCCH DMRS is used as a measurement reference signal during the resource sensing process in the resource pool, the time domain symbols in which the PSCCH is located include the PSSCH and/or the first-type SL PRS; and the PSCCH DMRS is a DMRS corresponding to the PSCCH.

In some implementations, when the PSSCH is used to carry only the second-stage SCI, the time domain symbols in which the PSCCH is located include the PSSCH and the first-type SL PRS; or when the PSSCH is used to carry the second-stage SCI and an SL-SCH, the time domain symbols in which the PSCCH is located include the PSSCH.

In some implementations, REs occupied by the PSSCH and/or the first-type SL PRS are REs within a first portion of REs excluding a second portion of REs, the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located.

In some implementations, when the time domain symbols in which the PSCCH is located include the PSSCH, the apparatus further includes: a processing unit 1802, configured to perform rate matching and/or repeated mapping on the PSSCH until the PSSCH occupies REs within a first portion of REs excluding a second portion of REs, wherein the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located.

In some implementations, when at least the PSSCH DMRS is used as a measurement reference signal during the resource sensing process in the resource pool, the time domain symbols in which the PSSCH DMRS is located include the PSSCH.

In some implementations, REs occupied by the PSSCH are REs within a third portion of REs excluding a fourth portion of REs, the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located.

In some implementations, the apparatus further includes: a processing unit 1802, configured to perform rate matching and/or repeated mapping on the PSSCH until the PSSCH occupies REs within a third portion of REs excluding a fourth portion of REs, wherein the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located.

In some implementations, the time domain symbols used to send the second-type SL PRS are determined in at least one of the following manners: network configuration, pre-configuration, and implementation by the terminal.

In some implementations, the implementation by the terminal is as follows: an MAC layer of the terminal determines the time domain symbols used to send the second-type SL PRS, and indicates the time domain symbols to a physical layer of the terminal.

In some implementations, the time domain symbols used to send the second-type SL PRS satisfy one or more of the following requirements:

the time domain symbols used to send the second-type SL PRS are: time domain symbols other than the first time domain symbol and/or the last time domain symbol among time domain symbols in the slot which are used for sidelink communication;

the time domain symbols used to send the second-type SL PRS are: time domain symbols that do not include the PSCCH;

the time domain symbols used to send the second-type SL PRS are: time domain symbols that do not include the PSSCH DMRS;

the time domain symbols used to send the second-type SL PRS are: time domain symbols not occupied by second-stage SCI;

the first time domain symbol among the time domain symbols used to send the second-type SL PRS is: time domain symbol *N+n1,* wherein time domain symbol *N* is the first time domain symbol that does not contain a PSSCH DMRS following the last time domain symbol in which the PSCCH is located, and *n1* is an integer greater than or equal to zero; and

the time domain symbols used to send the second-type SL PRS are: time domain symbols following time domain symbol *N* and spaced from any time domain symbol in which a PSSCH DMRS is located by a distance which is equal to or greater than n2, wherein time domain symbol *N* is the first time domain symbol that does not contain a PSSCH DMRS following the last time domain symbol in which the PSCCH is located, and *n2* is an integer greater than zero.

In some implementations, the number of time domain symbols used to send the second-type SL PRS is related to the number of ports for the PSSCH DMRS.

In some implementations, the processing unit 1802 is further configured to determine a comb size of the second-type SL PRS, and an RE offset corresponding to the first time domain symbol among the time domain symbols used to send the second-type SL PRS.

In some implementations, the comb size of the second-type SL PRS is determined by the MAC layer of the terminal, and is indicated by the MAC layer to the physical layer of the terminal; or the comb size of the second-type SL PRS is specified by protocol as: the maximum value among allowed comb sizes that is less than or equal to the number of time domain symbols in the slot which are used to send the second-type SL PRS.

In some implementations, the comb size of the second-type SL PRS is determined by the MAC layer of the terminal from the allowed comb sizes.

In some implementations, the RE offset corresponding to the first time domain symbol is determined by the MAC layer of the terminal and is indicated by the MAC layer to the physical layer of the terminal; or the RE offset corresponding to the first time domain symbol is determined by the physical layer of the terminal.

In some implementations, the RE offset corresponding to the first time domain symbol is selected by the MAC layer or the physical layer of the terminal from a first range, and the first range is determined based on the comb size of the second-type SL PRS.

In some implementations, the first range is $[0,\ K_{\text{comb}}^{\text{PRS}} - 1]$, and $K_{\text{comb}}^{\text{PRS}}$ represents the comb size of the second-type SL PRS.

In some implementations, when the SL PRS and the PSSCH are transmitted in a multiplexed manner in a same slot, the processing unit 1802 is further configured to determine a transport block size (TBS) of transport blocks carried in the PSSCH, wherein the TBS is related to a first parameter, the first parameter is related to a second parameter, the first parameter represents the number of reference REs available for the PSSCH among PRBs occupied by the PSSCH, and the second parameter represents the number of reference REs available for the PSSCH within one PRB; if time domain symbols occupied by the PSSCH and the SL PRS are different, then the second parameter is related to a third parameter, the third parameter representing the number of symbols occupied by the SL PRS and/or the number of symbols used to support PSFCH transmission; or if time domain symbols occupied by the PSSCH and the SL PRS are at least partially the same, then the second parameter is related to a fourth parameter, the fourth parameter representing the number of REs occupied by the SL PRS.

In some implementations, if no PSFCH resource is configured in the resource pool, then the third parameter represents the number of time domain symbols in a slot which are used for the second-type SL PRS; or if a PSFCH resource is configured in the resource pool, then the value of the third parameter is *M - f,* where *M* represents the number of time domain symbols in the slot which are used to send the second-type SL PRS, *f* represents the number of the last *F* time domain symbols in the slot which are available for sidelink communication among the *M* time domain symbols, $0 \le f \le F - 1$, and *F* is an integer greater than or equal to 1.

In some implementations, the fourth parameter is $M' \times N_{sc}^{RB} \div K_{\text{comb}}^{\text{PRS}}$, where *M'* is a fifth parameter, $N_{sc}^{RB}$ represents the number of subcarriers within one PRB, and $K_{\text{comb}}^{\text{PRS}}$ represents a comb size of the SL PRS.

In some implementations, if no PSFCH resource is configured in the resource pool, then the value of *M'* is *M*; if a PSFCH resource is configured in the resource pool, then the value of *M'* is *M - f*; *M* represents the number of time domain symbols in the slot which are used to send the second-type SL PRS, *f* represents the number of the last F time domain symbols in the slot which are available for sidelink communication among the *M* time domain symbols, $0 \le f \le F - 1$, and *F* is an integer greater than or equal to 1.

In some implementations, the processing unit 1802 is further configured to: during retransmission of a same TB, if the time domain symbols occupied by the PSSCH and the SL PRS are different, then determine that the number of time domain symbols occupied by an SL PRS sent together with the TB remains unchanged; and if time domain symbols occupied by the PSSCH and the SL PRS are at least partially the same, then determine that the number of time domain symbols occupied by the SL PRS sent together with the TB and a comb size of the SL PRS remain unchanged.

In some implementations, when at least the PSCCH DMRS is used as a measurement reference signal during the resource sensing process in the resource pool, the transmit power in the slot satisfies at least one of the following requirements:

transmit powers on time domain symbols in the slot except for time domain symbols in which a GP is located are *all P*;
a transmit power on an RE, in which the PSCCH DMRS, of the slot is located is $P/K$; and
a transmit power on time domain symbols, in which the PSCCH is located, of the slot is $P$,

wherein $P$ is the transmit power on the time domain symbols in the slot except for the time domain symbols in which the GP is located, and $K$ is the total number of REs included in a resource range allocated or selected for the terminal.

In some implementations, when at least the PSSCH DMRS is used as a measurement reference signal during the resource sensing process in the resource pool, the transmit power in the slot satisfies at least one of the following requirements:

transmit powers on time domain symbols in the slot except for time domain symbols in which a GP is located are all $P$;
a transmit power on an RE in the slot in which the PSSCH DMRS is located is $P/K$; and
a transmit power on time domain symbols in the slot in which the PSSCH DMRS is located is $P$,

wherein $P$ is the transmit power on the time domain symbols in the slot except for the time domain symbols in which the GP is located, and $K$ is the total number of REs included in a resource range allocated or selected for the terminal.

It should be understood by a person skilled in the art that the relevant description of the above sidelink transmission apparatus in the embodiments of the present application may be understood with reference to the relevant description of the sidelink transmission method in the embodiments of the present application.

FIG. 19 is a schematic structural diagram of a communication device 1900 provided in an embodiment of the present application. The communication device 1900 shown in FIG. 19 includes a processor 1910. The processor 1910 may invoke and run a computer program from a memory so as to implement the methods in the embodiments of the present application.

Optionally, as shown in FIG. 19, the communication device 1900 may further include a memory 1920. The processor 1910 may invoke and run a computer program from the memory 1920 so as to implement the methods in the embodiments of the present application.

The memory 1920 may be a separate component independent of the processor 1910, and may also be integrated in the processor 1910.

Optionally, as shown in FIG. 19, the communication device 1900 may further include a transceiver 1930. The processor 1910 may control the transceiver 1930 to perform communication with other devices. Specifically, the transceiver may send information or data to other devices, or receive information or data sent by other devices.

The transceiver 1930 may include a transmitter and a receiver. The transceiver 1930 may further include one or more antennas.

The communication device 1900 may specifically be the terminal in the embodiments of the present application, and the communication device 1200 may implement the corresponding processes implemented by the terminal in the respective methods of the embodiments of the present application, which will not be repeated herein for the sake of brevity.

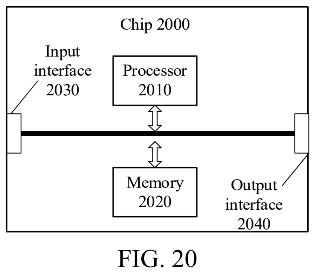

FIG. 20 is a schematic structural diagram of a chip according to an embodiment of the present application. The chip 2000 shown in FIG. 20 includes a processor 2010. The processor 2010 may invoke and run a computer program from a memory to implement the methods in the embodiments of the present application.

Optionally, as shown in FIG. 20, the chip 2000 may further include a memory 2020. The processor 2010 may invoke and run a computer program from the memory 2020 so as to implement the methods in the embodiments of the present application.

The memory 2020 may be a separate component independent of the processor 2010, and may also be integrated in the processor 2010.

Optionally, the chip 2000 may further include an input interface 2030. The processor 2010 may control the input interface 2030 to perform communication with other devices or chips. Specifically, the input interface may obtain information or data sent by other devices or chips.

Optionally, the chip 2000 may further include an output interface 2040. The processor 2010 may control the output interface 1940 to perform communication with other devices or chips. Specifically, the output interface may output information or data to other devices or chips.

The chip may be applied to the terminal in the embodiments of the present application, and the chip may implement the corresponding processes implemented by the terminal in the respective methods of the embodiments of the present application, which will not be repeated herein for the sake of brevity.

It should be understood that the chip mentioned in the embodiment of the present application may also be referred to as a system-level chip, a system chip, a chip system, or a system-on-chip chip, or the like.

It should be understood that the processor in the embodiments of the present application may be an integrated circuit chip with a signal processing capability. During implementation, each step in the method embodiments described above may be completed by an integrated logic circuit of hardware in a processor or instructions in the form of software. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The various methods, steps, and logical block diagrams disclosed in the embodiments of the present application may be implemented or executed. The general-purpose processor may be a microprocessor, or the processor may also be any conventional processor, etc. The steps of the methods disclosed in combination with the embodiments of the present application may be directly executed and completed by a hardware decoding processor, or executed and completed by a combination of hardware and software modules in the decoding processor. Software modules may be located in a mature storage medium in the present field such as a random access memory, a flash memory, a read-only memory, a programmable read-only memory, an electrically erasable programmable memory, or a register. The storage medium is located in the memory, and the processor reads the information in the memory, and completes the steps of the above methods in combination with its hardware.

It can be understood that the memory in the embodiments of the present application may be a volatile memory or a nonvolatile memory, or may include both volatile and nonvolatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM), which acts as an external cache. By way of example, but not by way of limitation, many forms of RAMs are available, such as static random access memories (Static RAM, SRAM), dynamic random access memories (Dynamic RAM, DRAM), synchronous dynamic random access memories (Synchronous DRAM, SDRAM), double data rate synchronous dynamic random access memories (Double Data Rate SDRAM, DDR SDRAM), enhanced synchronous dynamic random access memories (Enhanced SDRAM, ESDRAM), synchronous link dynamic random access memories (Synchlink DRAM, SLDRAM) and direct memory bus random access memories (Direct Rambus RAM, DR RAM). It should be noted that the memory in the systems and methods described herein is intended to include, but is not limited to, the foregoing and any other suitable type of memory.

It should be understood that the above-mentioned memory is illustrative but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present application is intended to include, but is not limited to, the foregoing and any other suitable type of memory.

A computer-readable storage medium for storing a computer program is further provided in an embodiment of the present application. The computer-readable storage medium may be applied to the terminal in the embodiments of the present application, and the computer program enables a computer to perform the corresponding processes implemented by the terminal in the respective methods of the embodiments of the present application, which will not be repeated herein for the sake of brevity.

A computer program product including computer program instructions is further provided in an embodiment of the present application. The computer program product may be applied to the terminal in the embodiments of the present application, and the computer program instructions enable a computer to perform the corresponding processes implemented by the terminal in the respective methods of the embodiments of the present application, which will not be repeated herein for the sake of brevity.

A computer program is further provided in an embodiment of the present application. The computer program may be applied to the terminal in the embodiments of the present application, and the computer program, when run on a computer, enables the computer to perform the corresponding processes implemented by the terminal in the respective methods of the embodiments of the present application, which will not be repeated herein for the sake of brevity.

A person skilled in the art can appreciate that the units and algorithm steps of the examples described in combination with the embodiments disclosed herein can be implemented by electronic hardware, or a combination of computer software and electronic hardware. These functions are executed in hardware or software, depending on the specific applications and design constraints of the technical solutions. A professional skilled person may use different methods for each specific application to implement the described functions, but said implementation should not be considered to exceed the scope of the present application.

It can be clearly understood by a person skilled in the art that for the convenience and brevity of the description, reference may be made to the corresponding processes in the foregoing method embodiments for the specific working process of the systems, apparatuses and units described above, which will not be repeated here.

In several embodiments provided by the present application, it should be understood that the disclosed systems, apparatuses, and methods may be implemented by other means. For example, the apparatus embodiments described above are merely illustrative. For example, the division of the units is only a logical function division. During actual implementation, there may be other division methods. For example, a plurality of units or components may be combined or integrated into another system, or some features may be ignored or not implemented. Furthermore, the displayed or discussed coupling or direct coupling or communication connections may be by means of some interfaces, and the indirect coupling or communication connections of apparatuses or units may be in electrical, mechanical or other forms.

The units described as separate components may or may not be physically separated, and the components displayed as units may or may not be physical units, that is, they may be located in one place, or may be distributed to a plurality of network units. A part or all of the units may be selected according to actual needs to achieve the objective of the solution of the present embodiment.

In addition, the functional units in various embodiments of the present application may be integrated in one processing unit, or each unit may be individually physically present, or two or more units may be integrated into one unit.

If the functions described above are implemented in the form of software function units and sold or used as separate products, they may be stored in a computer-readable storage medium. On the basis of such understanding, an essential part of the technical solution of the present application, or the part thereof that contributes to the prior art, or a part of the technical solution may be embodied in the form of a software product. The computer software product is stored in a storage medium, and includes several instructions used to enable a computer device (which may be a personal computer, a server, a network device, or the like) perform all or part of the steps of the methods described in the various embodiments of the present application. The foregoing storage medium includes: a U disk, a mobile hard disk, a Read Only Memory (ROM), a Random Access Memory (RAM), a magnetic disk, an optical disk, or other media that can store program codes.

The detailed description of the present application are merely described above, but the scope of protection of the present application is not limited thereto. Any person skilled in the art can easily conceive of changes or substitutions within the technical scope disclosed in the present application, and all of the changes or substitutions should be covered by the scope of protection of the present application. Therefore, the scope of protection of the present application should be defined by the scope of protection of the claims.

**Claims**

1. A sidelink transmission method, comprising:
   sending or receiving, by a terminal, a Sidelink Positioning Reference Signal (SL PRS) and a physical channel, the physical channel comprising a Physical Sidelink Control Channel (PSCCH) and/or a Physical Sidelink Shared Channel (PSSCH), wherein the SL PRS and the physical channel share a resource pool, and the SL PRS and the physical channel are transmitted in a multiplexed manner in a same slot.

2. The method according to claim 1, wherein the SL PRS comprises a first-type SL PRS and/or a second-type SL PRS;

   the first-type SL PRS refers to an SL PRS sent on first-type time domain symbols, and the first-type time domain symbols refer to time domain symbols, in which the PSCCH is located, of the slot ;
   the second-type SL PRS refers to an SL PRS sent on second-type time domain symbols, and the second-type time domain symbols refer to time domain symbols, that do not contain the PSCCH and/or a PSSCH demodulation reference signal (DMRS), of the slot; and
   the PSSCH DMRS is a DMRS corresponding to the PSSCH.

3. The method according to claim 2, wherein a comb size of the first-type SL PRS is less than a comb size of the second-type SL PRS.

4. The method according to claim 2 or 3, wherein

   when the PSSCH is used to carry only second-stage Sidelink Control Information (SCI), the SL PRS comprises the first-type SL PRS and the second-type SL PRS; or
   when the PSSCH is used to carry second-stage SCI and a Sidelink Shared Channel (SL-SCH), the SL PRS comprises only the second-type SL PRS.

5. The method according to any one of claims 2 to 4, wherein when at least a PSCCH DMRS is used as a measurement reference signal during a resource sensing process in the resource pool,

the time domain symbols in which the PSCCH is located comprise the PSSCH and/or the first-type SL PRS; and the PSCCH DMRS is a DMRS corresponding to the PSCCH.

6. The method according to claim 5, wherein

when the PSSCH is used to carry only second-stage SCI, the time domain symbols in which the PSCCH is located comprise the PSSCH and the first-type SL PRS; or
when the PSSCH is used to carry second-stage SCI and an SL-SCH, the time domain symbols in which the PSCCH is located comprise the PSSCH.

7. The method according to claim 5 or 6, wherein Resource Elements (REs) occupied by the PSSCH and/or the first-type SL PRS are REs within a first portion of REs excluding a second portion of REs, the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located.

8. The method according to any one of claims 5 to 7, wherein when the time domain symbols in which the PSCCH is located comprise the PSSCH, the method further comprises:
performing, by the terminal, rate matching and/or repeated mapping on the PSSCH until the PSSCH occupies REs within a first portion of REs excluding a second portion of REs, wherein the first portion of REs refer to REs corresponding to the time domain symbols in which the PSCCH is located within a resource range allocated or selected for the terminal, and the second portion of REs refer to REs, that have been occupied by the PSCCH DMRS and the PSCCH, on the time domain symbols in which the PSCCH is located.

9. The method according to any one of claims 2 to 4, wherein when at least a PSSCH DMRS is used as a measurement reference signal during a resource sensing process in the resource pool,
time domain symbols in which the PSSCH DMRS is located comprise the PSSCH.

10. The method according to claim 9, wherein REs occupied by the PSSCH are REs within a third portion of REs excluding a fourth portion of REs, the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located.

11. The method according to claim 9 or 10, further comprising:
performing, by the terminal, rate matching and/or repeated mapping on the PSSCH until the PSSCH occupies REs within a third portion of REs excluding a fourth portion of REs, wherein the third portion of REs refer to REs corresponding to the time domain symbols in which the PSSCH DMRS is located within a resource range allocated or selected for the terminal, and the fourth portion of REs refer to REs, that have been occupied by the PSSCH DMRS, on the time domain symbols in which the PSSCH DMRS is located.

12. The method according to any one of claims 2 to 11, wherein time domain symbols used to send the second-type SL PRS are determined in at least one of the following manners: network configuration, pre-configuration, and implementation by the terminal.

13. The method according to claim 12, wherein the implementation by the terminal is as follows: an MAC layer of the terminal determines the time domain symbols used to send the second-type SL PRS, and indicates the time domain symbols to a physical layer of the terminal.

14. The method according to any one of claims 2 to 13, wherein time domain symbols used to send the second-type SL PRS satisfy one or more of the following requirements:

the time domain symbols used to send the second-type SL PRS are: time domain symbols other than the first time domain symbol and/or the last time domain symbol among time domain symbols in the slot which are used for sidelink communication;

the time domain symbols used to send the second-type SL PRS are: time domain symbols that do not comprise the PSCCH;

the time domain symbols used to send the second-type SL PRS are: time domain symbols that do not comprise the PSSCH DMRS;

the time domain symbols used to send the second-type SL PRS are: time domain symbols not occupied by second-stage SCI;

the first time domain symbol among the time domain symbols used to send the second-type SL PRS is: time domain symbol $N+n1$, wherein time domain symbol $N$ is the first time domain symbol that does not contain a PSSCH DMRS following the last time domain symbol in which the PSCCH is located, and $n1$ is an integer greater than or equal to zero; and

the time domain symbols used to send the second-type SL PRS are: time domain symbols following time domain symbol $N$ and spaced from any time domain symbol in which a PSSCH DMRS is located by a distance which is equal to or greater than $n2$, wherein time domain symbol $N$ is the first time domain symbol that does not contain a PSSCH DMRS following the last time domain symbol in which the PSCCH is located, and $n2$ is an integer greater than zero.

15. The method according to any one of claims 2 to 14, wherein a number of time domain symbols used to send the second-type SL PRS is related to a number of ports for the PSSCH DMRS.

16. The method according to any one of claims 2 to 15, further comprising:
determining, by the terminal, a comb size of the second-type SL PRS, and an RE offset corresponding to the first time domain symbol among time domain symbols used to send the second-type SL PRS.

17. The method according to claim 16, wherein

the comb size of the second-type SL PRS is determined by a Medium Access Control (MAC) layer of the terminal and is indicated by the MAC layer to a physical layer of the terminal; or

the comb size of the second-type SL PRS is specified by protocol as: a maximum value among allowed comb sizes that is less than or equal to a number of time domain symbols in the slot which are used to send the second-type SL PRS.

18. The method according to claim 17, wherein the comb size of the second-type SL PRS is determined by the MAC layer of the terminal from the allowed comb sizes.

19. The method according to any one of claims 16 to 18, wherein

the RE offset corresponding to the first time domain symbol is determined by an MAC layer of the terminal and is indicated by the MAC layer to a physical layer of the terminal; or

the RE offset corresponding to the first time domain symbol is determined by a physical layer of the terminal.

20. The method according to claim 19, wherein the RE offset corresponding to the first time domain symbol is selected by the MAC layer or the physical layer of the terminal from a first range, and the first range is determined based on the comb size of the second-type SL PRS.

21. The method according to claim 20, wherein the first range is $[0,\ K_{\mathrm{comb}}^{\mathrm{PRS}} - 1]$, and $K_{\mathrm{comb}}^{\mathrm{PRS}}$ represents the comb size of the second-type SL PRS.

22. The method according to any one of claims 2 to 21, wherein when the SL PRS and the PSSCH are transmitted in a multiplexed manner in a same slot, the method further comprises:

determining, by the terminal, a Transport Block Size (TBS) of transport blocks carried in the PSSCH, wherein the TBS is related to a first parameter, the first parameter is related to a second parameter, the first parameter represents a number of reference REs available for the PSSCH among Physical Resource Blocks (PRBs) occupied by the PSSCH, and the second parameter represents a number of reference REs available for the PSSCH within one PRB;

if time domain symbols occupied by the PSSCH and the SL PRS are different, then the second parameter is related to a third parameter, the third parameter representing a number of symbols occupied by the SL PRS and/or a number of symbols used to support PSFCH transmission; or

if time domain symbols occupied by the PSSCH and the SL PRS are at least partially the same, then the second parameter is related to a fourth parameter, the fourth parameter representing a number of REs occupied by the SL PRS.

23. The method according to claim 22, wherein

if no Physical Sidelink Feedback Channel (PSFCH) resource is configured in the resource pool, then the third parameter represents a number of time domain symbols in a slot which are used for the second-type SL PRS; or
if a PSFCH resource is configured in the resource pool, then a value of the third parameter is *M - f,* wherein *M* represents a number of time domain symbols in the slot which are used to send the second-type SL PRS, *f* represents a number of the last F time domain symbols in the slot which are available for sidelink communication among the *M* time domain symbols, $0 \leq f \leq F - 1$, and *F* is an integer greater than or equal to 1.

24. The method according to claim 22, wherein the fourth parameter is $M' \times N_{sc}^{RB} \div K_{\mathrm{comb}}^{\mathrm{PRS}}$, *M'* is a fifth parameter, $N_{sc}^{RB}$ represents a number of subcarriers within one PRB, and $K_{\mathrm{comb}}^{\mathrm{PRS}}$ represents a comb size of the SL PRS.

25. The method according to claim 24, wherein

if no Physical Sidelink Feedback Channel (PSFCH) resource is configured in the resource pool, then a value of *M'* is *M;* or
if a PSFCH resource is configured in the resource pool, then a value of *M'* is *M - f,* wherein *M* represents a number of time domain symbols in the slot which are used to send the second-type SL PRS, *f* represents a number of the last F time domain symbols in the slot which are available for sidelink communication among the *M* time domain symbols, $0 \leq f \leq F - 1$, and *F* is an integer greater than or equal to 1.

26. The method according to any one of claims 22 to 25, further comprising:
during retransmission of a same Transport Block (TB), if the time domain symbols occupied by the PSSCH and the SL PRS are different, determining, by the terminal, that a number of time domain symbols occupied by an SL PRS sent together with the TB remains unchanged; and if the time domain symbols occupied by the PSSCH and the SL PRS are at least partially the same, determining, by the terminal, that a number of time domain symbols occupied by an SL PRS sent together with the TB and a comb size of the SL PRS remain unchanged.

27. The method according to any one of claims 1 to 8 or claims 12 to 26, wherein when at least the PSCCH DMRS is used as a measurement reference signal during a resource sensing process in the resource pool, a transmit power in the slot satisfies at least one of the following requirements:

transmit powers on time domain symbols in the slot except for time domain symbols in which a Guard Period (GP) is located are all *P;*
a transmit power on an RE, in which the PSCCH DMRS, of the slot is located is *P/K;* and
a transmit power on time domain symbols, in which the PSCCH is located, of the slot is *P,*
wherein *P* is the transmit power on the time domain symbols in the slot except for the time domain symbols in which the GP is located, and *K* is a total number of REs included in a resource range allocated or selected for the terminal.

28. The method according to any one of claims 1 to 4 or claims 9 to 26, wherein when at least a PSSCH DMRS is used as a measurement reference signal during a resource sensing process in the resource pool, a transmit power in the slot satisfies at least one of the following requirements:

transmit powers on time domain symbols in the slot except for time domain symbols in which a Guard Period (GP) is located are all *P;*
a transmit power on an RE in the slot in which the PSSCH DMRS is located is *P/K;* and
a transmit power on time domain symbols in the slot in which the PSSCH DMRS is located is *P,*
wherein P is the transmit power on the time domain symbols in the slot except for the time domain symbols in which the GP is located, and *K* is a total number of REs included in a resource range allocated or selected for the terminal.

29. A sidelink transmission apparatus, comprising:
a communication unit, configured to send or receive a Sidelink Positioning Reference Signal (SL PRS) and a physical channel, the physical channel comprising a Physical Sidelink Control Channel (PSCCH) and/or a Physical Sidelink Shared Channel (PSSCH), wherein the SL PRS and the physical channel share a resource pool, and the SL PRS and the physical channel are transmitted in a multiplexed manner in a same slot.

30. A terminal, comprising: a processor and a memory, the memory being configured to store a computer program, and the processor being configured to invoke and run the computer program stored in the memory to perform the method according to any one of claims 1 to 28.

31. A chip, comprising: a processor, configured to invoke and run a computer program from a memory, such that a device having the chip installed therein performs the method according to any one of claims 1 to 28.

32. A computer-readable storage medium, configured to store a computer program, wherein the computer program enables a computer to perform the method according to any one of claims 1 to 28.

33. A computer program product, comprising computer program instructions, wherein the computer program instructions enable a computer to perform the method according to any one of claims 1 to 28.

34. A computer program, configured to enable a computer to perform the method according to any one of claims 1 to 28.

Base station

Sidelink communication

FIG. 1-1

Base station

Sidelink communication

FIG. 1-2

Sidelink communication

FIG. 1-3

Excluded resource

n-T$_{proc,0}$

E(v,m)

n-T0

a
Slot in which sensing
is not performed

n

n+T1

n+T2

t

Sensing window

Selection window

## FIG. 2

sl-StartSymbol

sl-LengthSymbols

Frequency

0   1   2   3   4   5   6   7   8   9   10   11   12   13

Time

PSCCH   PSSCH   PSFCH   GP

SYMBOLS
UNAVAILABLE
FOR SIDELINK

## FIG. 3

FIG. 4

FIG. 5

FIG. 6

PSCCH frequency-domain
resource indication

PSCCH

PSSCH

The number of
sub-channels = 3

Sub-channel size

PSCCH

PSSCH

PSCCH

PSSCH

Frequency

Time

Sub-channel starting
RB index

FIG. 7

Slot 0 — Slot 1

☐ Downlink
symbol
☐ Flexible
symbol
■ Uplink symbol

FIG. 8

| | |
|---|---|
| | SL-PRS |
| SL-PRS | |
| | SL-PRS |
| SL-PRS | |
| | SL-PRS |
| SL-PRS | |
| | SL-PRS |
| SL-PRS | |
| | SL-PRS |
| SL-PRS | |
| | SL-PRS |
| SL-PRS | |
| | SL-PRS |
| SL-PRS | |
| SL-PRS | |

Comb size = 2,
RE offset = 0

Comb size = 2,
RE offset = 1

## FIG. 9

| 0 | 1 | 2 | 3 | 4 | 0 | 1 | 2 | 3 | 4 | 0 | 1 | 2 | 3 | 4 | 0 | 1 | 2 | 3 | 4 |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |

Frequency (RB)     IRB 0          IRB 1

## FIG. 10

FIG. 11

FIG. 12

A terminal sends or receives an SL PRS, where the SL PRS is generated through an SL PRS sequence, the SL PRS sequence is generated based on the lowest $L$ bits of a PSCCH CRC or based on an ID determined by a higher layer of a sending terminal, and $L$ is an integer greater than or equal to 0

1301

FIG. 13

A terminal sends or receives an SL PRS and a physical channel, the physical channel including a PSCCH and/or a PSSCH, where the SL PRS and the physical channel share a resource pool, and the SL PRS and the physical channel are transmitted in a multiplexed manner in a same slot

1401

## FIG. 14

## FIG. 15

## FIG. 16

Sidelink transmission apparatus

Communication unit 1701

## FIG. 17

Sidelink transmission apparatus

Communication unit 1801

Processing unit 1802

## FIG. 18

Communication device
1900

Memory
1920

Processor
1910

Transceiver
1930

## FIG. 19

FIG. 20

## INTERNATIONAL SEARCH REPORT

| International application No. |
|---|
| **PCT/CN2023/093841** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04W, H04L

Documentation searched other than minimum documentation to the extent that such documents are included in the fields searched

Electronic data base consulted during the international search (name of data base and, where practicable, search terms used)

CNTXT, ENTXT, ENTXTC, DWPI, 3GPP: 定位参考信号, 复用, 同一时隙, 侧行, 共享资源池, PRS, SL, multiplexing, PSCCH, PSSCH, sidelink, shared resource pool

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022180597 A2 (LENOVO (SINGAPORE) PTE. LTD.) 01 September 2022 (2022-09-01) description, paragraphs 110, 113, and 129 | 1-34 |
| Y | CN 115706627 A (CITIC KEZHILIAN TECHNOLOGY CO., LTD.) 17 February 2023 (2023-02-17) description, paragraphs 50 and 53 | 1-34 |
| A | CN 112753186 A (IDAC HOLDINGS, INC.) 04 May 2021 (2021-05-04) entire document | 1-34 |
| A | CN 115699662 A (LENOVO (SINGAPORE) PTE. LTD.) 03 February 2023 (2023-02-03) entire document | 1-34 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2023** | **14 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/093841** |

| Patent document cited in search report | | | Publication date (day/month/year) | Patent family member(s) | | | Publication date (day/month/year) |
| --- | --- | --- | --- | --- | --- | --- | --- |
| WO | 2022180597 | A2 | 01 September 2022 | CN | 116918290 | A | 20 October 2023 |
| CN | 115706627 | A | 17 February 2023 | WO | 2023011347 | A1 | 09 February 2023 |
| CN | 112753186 | A | 04 May 2021 | JP | 2022171782 | A | 11 November 2022 |
| | | | | WO | 2020033719 | A1 | 13 February 2020 |
| | | | | EP | 3834328 | A1 | 16 June 2021 |
| | | | | RU | 2021137728 | A | 19 January 2022 |
| | | | | JP | 2021533665 | A | 02 December 2021 |
| | | | | US | 2021297221 | A1 | 23 September 2021 |
| | | | | RU | 2021105460 | A | 05 September 2022 |
| CN | 115699662 | A | 03 February 2023 | EP | 4158829 | A1 | 05 April 2023 |
| | | | | BR | 112022024306 | A2 | 27 December 2022 |
| | | | | WO | 2021240479 | A1 | 02 December 2021 |
| | | | | WO | 2021240478 | A1 | 02 December 2021 |
| | | | | EP | 4158828 | A1 | 05 April 2023 |
| | | | | KR | 20230019102 | A | 07 February 2023 |
| | | | | US | 2023224121 | A1 | 13 July 2023 |
| | | | | US | 2023199802 | A1 | 22 June 2023 |

Form PCT/ISA/210 (patent family annex) (July 2022)